# EUROPEAN PATENT SPECIFICATION

(11) **EP 3 242 560 B1**
(45) Date of publication and mention of the grant of the patent: **13.04.2022**
(21) Application number: 16701242.6
(22) Date of filing: 07.01.2016
(51) Int. Cl.: A23D 7/01, A23D 9/013

(54) **FAT BLENDS AND SPREADS CONTAINING THEM**
FETTMISCHUNGEN UND AUFSTRICHE DAMIT
MÉLANGE DE MATIÈRES GRASSES ET PÂTES À TARTINER LES CONTENANT

(30) Priority: 07.01.2015 WO PCT/EP2015/000011
(43) Date of publication of application: 15.11.2017
(73) Proprietor: Raisio Nutrition Ltd, 21200 Raisio (FI)
(72) Inventor: NIEMELÄ, Jouni, 21200 Raisio (FI); WESTER, Ingmar, 21200 Raisio (FI); KUUSISTO, Päivi, 21200 Raisio (FI)
(86) International application number: PCT/EP2016/000012
(87) International publication number: WO 2016/110447

(56) References cited:
- EP-A1- 2 183 977
- EP-B1- 0 948 265
- WO-A1-99/56558
- WO-A1-2010/094839
- US-A1- 2005 281 932
- P Nestel ET AL: "Original Communication Cholesterol-lowering effects of plant sterol esters and non-esterified stanols in margarine, butter and low-fat foods", European Journal of Clinical Nutrition, 1 December 2001 (2001-12-01), pages 1084-1090, XP055208552, Retrieved from the Internet: URL:http://www.nature.com/ejcn/journal/v55 /n12/pdf/1601264a.pdf [retrieved on 2015-08-19] cited in the application

## Description

### FIELD OF THE INVENTION

The invention relates to the field of healthy foods and especially to fat blends and their use in LDL cholesterol lowering, healthy and good tasting spreads.

### BACKGROUND OF THE INVENTION

Cardiovascular disease is counted among the most common diseases in Western countries and its occurrence is increasing also in Asian countries. The most important individual risk factor is elevated serum LDL cholesterol level, and therefore, lowering of the serum concentrations of LDL cholesterol is the most effective single measure regarding both prevention and effective treatment of cardiovascular disease.

In addition or as an alternative to cholesterol lowering drugs, life style changes can reduce the risk of cardiovascular diseases. In particular increasing physical exercise and/or adopting healthy diets recommended by governments or non-governmental associations are beneficial. For example replacing saturated fats with unsaturated fats has a beneficial effect on serum LDL cholesterol. Vegetable oil based margarines are therefore recommended instead of butter.

An additional nutritional way to reduce serum LDL cholesterol levels is the use of food products enriched with plant sterols and/or plant stanols and/or esters thereof having a cholesterol lowering effect. This alternative has been greatly welcomed by consumers. Plant sterols have since the early 1950's been known to reduce serum cholesterol levels. US6174560 describes plant stanol fatty acid esters, a method for their preparation, and the cholesterol lowering effects thereof. An intake of 2 g per day of plant stanol equivalents provided as plant stanol ester is reported to lower serum LDL cholesterol levels in man by up to 14%. Benecol^{®} is a well-known trademark for products containing plant stanol ester and nowadays plant stanol ester is used in a variety of food products.

Margarine-type spreads that contain plant sterol ester and/or plant stanol ester as a cholesterol lowering ingredient are commercially available. The fat phase of these spreads contains plant sterol ester and/or plant stanol ester, vegetable oil(s), and vegetable fat(s) such as palm oil or coconut oil. In some spreads buttermilk is used in addition to conventional flavour blends providing a butter-like taste in an attempt to imitate butter flavour.

Conventional spreads (i.e. spreads not enriched with plant sterol ester and/or plant stanol ester) based on butter - vegetable oil blends are also available on the market. These spreads often contain 60 -70% milk fat of the fat blend, to provide the buttery taste. These spreads cannot be seen as healthy, because they contain more saturated fatty acids than what is recommended.

Spreads containing milk fat and plant sterol ester have also been disclosed. A study of Nestel et al. (European Journal of Clinical Nutrition 2001;55:1084-1090) used a dairy spread containing 80% fat, of which 50% was butter fat. A portion of 20 g of this spread provided 2.4 g plant sterols (4 g as plant sterol ester), which means that the fat blend contained 25 % plant sterol ester. The rest (25% of the fat blend) consisted of a mixture of vegetable oil (rapeseed oil) and vegetable fat (palm oil). The spread contained 46% saturated fatty acids of the fatty acid composition.

EP0948265 Example 10 discloses a product containing a mixture of vegetable oil, butter and plant sterol/stanol, as well as minerals magnesium, calcium and potassium. The fat phase of this product contains 17% plant sterol/stanol and 43% butter fat. The nature of the vegetable oil is not disclosed, and therefore the fatty acid composition of this product cannot be estimated. However, if the vegetable oil was chosen from any common vegetable oil, the amount of saturated fatty acids in the product would be higher than recommended.

WO2010/094839 discloses different products, also spreads, containing sterol and/or stanol ester, and/or at least one biologically active peptide, and milk fat and/or milk solids non-fat components. The spreads contain 20 to 60% of fat, and the proportion of milk fat is 1 to 15% of the fat. The spreads also contain vegetable oils (rapeseed, canola, soy and sunflower oil) and vegetable fats (palm oil and coconut fat), but their amounts or proportions in the fat blend have not been disclosed, and thus the fatty acid composition of the spreads cannot be estimated.

The current invention removes drawbacks related to the above mentioned products and provides improved fat blends suitable for making spreads, as well as such spreads.

### BRIEF DESCRIPTION OF THE INVENTION

The present invention is directed to a fat blend containing
- plant sterol ester and/or plant stanol ester in an amount of at least 10% and at most 50% by weight,
- milk fat in an amount of at least 26% and at most 40 % by weight, and
- vegetable oil in an amount of at least 30% and at most 60 % by weight, and
wherein the amount of saturated fatty acids is at most 35 % of the fatty acid composition of the fat blend.

The present invention is further directed to a spread containing an aqueous phase and a fat phase, in which the fat phase consists of the above defined fat blend.

### DETAILED DESCRIPTION OF THE INVENTION

The benefits of the current invention are that the invention provides serum LDL cholesterol lowering margarine-type spreads containing plant sterol ester and/or plant stanol ester, which spreads have an improved butter-like taste, a suitable spreadability and also a nutritionally balanced fatty acid profile. The invention also provides fat blends containing plant sterol ester and/or plant stanol ester that can be used for preparation of such spreads.

It is thus an object of the present invention to provide a fat blend comprising plant sterol ester and/or plant stanol ester in an amount of at least 10 wt-% and at most 50 wt-%, milk fat in an amount of at least 26 wt% and at most 40 wt-%, and vegetable oil in an amount of at least 30 wt-% and at most 60 wt-% of the fat blend, and wherein the amount of saturated fatty acids is at most 35% of the fatty acid composition of the fat blend.

It was surprisingly found that a fat blend based on certain amounts of milk fat, vegetable oil and plant sterol ester and/or plant stanol ester provides means for producing spreads and shortenings with a good buttery taste. The good buttery taste could be obtained although the amount of milk fat was lower than in the conventional spreads made of milk fat and vegetable oil blends that claim to have good buttery taste. On the other hand, when compared to spreads where buttermilk is used in an attempt to provide butter-like taste, the fat blend according to the present invention contains a lot of milk fat, which is known not to have a nutritionally balanced fatty acid composition. Surprisingly despite providing a good buttery taste, the fat blend of the invention still has a nutritionally balanced fatty acid composition. It was not expected that such excellent products could be obtained that have a good buttery taste and suitable spreadability, and that at the same time have a nutritionally balanced fatty acid composition and preferably fulfil several nutritional recommendations.

The fat blend has a nutritionally balanced fatty acid composition in which the amount of saturated fatty acids is surprisingly low (at most 35 % of the fatty acid composition) although milk fat is added for improving the taste to provide good buttery taste. The expression "nutritionally balanced" may refer also to one or more of the following preferred features of the fatty acid composition described in this paragraph. Especially, the amount of lauric acid (C12:0) and myristic acid (C14:0) of the fatty acid composition of the fat blend is preferably low. Further, the sum of serum LDL cholesterol raising saturated fatty acids lauric acid (C12:0), myristic acid (C14:0) and palmitic acid (C16:0) of the fatty acid composition of the fat blend is preferably low. The estimated effect of the fatty acid composition on serum LDL cholesterol is preferably neutral. Also the amount of stearic acid, which may be linked to an increased risk of CHD by other mechanisms than by increasing serum LDL cholesterol, is preferably low in the fatty acid composition of the fat blend of the invention. Preferably also the amount of unsaturated fatty acids is quite high. More preferably the fat blend according to the invention fulfils at least two, still more preferably at least three, even more preferably at least four, further more preferably at least five, and most preferably all of the above mentioned features. Such a fat blend and a spread containing the fat blend can therefore preferably be seen as healthy and it fulfils requirements of nutritional recommendations.

Therefore, despite the milk fat included in the fat blend, the fatty acid composition is nutritionally balanced. In addition, the fat blend is even healthier because of the serum LDL cholesterol-lowering plant sterol ester and/or plant stanol ester.

Thus, the fat blend of the invention contains plant sterol ester and/or plant stanol ester, which lowers serum LDL cholesterol. It was surprisingly found that by using certain amounts of plant sterol ester and/or plant stanol ester, together with certain amounts of milk fat and certain amounts of vegetable oil, a fat blend providing an improved buttery taste but still having a balanced fatty acid composition and a serum LDL cholesterol lowering efficacy can be prepared. The fat blend is suitable e.g. for preparation of spreads and shortenings.

The amount of saturated fatty acids (SAFA) is quite low in the fat blend according to the invention. The amount of saturated fatty acids (SAFA) is at most 35% of the fatty acid composition of the fat blend. By the term "nutritionally balanced fatty acid composition" or "nutritionally balanced fatty acid profile" is meant a fatty acid composition in which the amount of saturated fatty acids is at most 35%, preferably at most 33%, more preferably at most 32% and still more preferably at most 30% of the fatty acid composition. Thus the fat blend of the invention can be used for preparation of a spread or a shortening that has a fatty acid composition which is nutritionally balanced and preferably in line with dietary recommendations. This is surprising, as all conventional spreads containing milk fat as a source of the buttery taste of the product contain too much saturated fat to be eligible for dietary recommendations.

Preferably the total amount of lauric acid (C12:0) and myristic acid (C14:0) is at most 7.5% of the fatty acid composition in the fat blend. Preferably the total amount of lauric acid (C12:0), myristic acid (C14:0) and palmitic acid (C16:0) is at most 25% of the fatty acid composition in the fat blend.

The estimated effect of the fatty acid composition of the fat blend on serum LDL cholesterol is preferably neutral, which means that the fatty acid composition does not increase serum LDL cholesterol to any notable extent (the increase is preferably at most 0.03 mmol/1, when dietary energy from carbohydrates is replaced isoenergetically with 20 g of the fat blend). This is exceptional in spreads containing milk fat as a source of a good buttery taste. Conventional spreads that are based on butter - vegetable oil blends and have a buttery taste, have a fatty acid composition that increases serum LDL cholesterol. The estimated effect of the fatty acid composition in the fat blend on serum LDL cholesterol when calculated based on an isoenergetical replacement of carbohydrates is at most 20% of the estimated effect that would be obtained if the same amount (e.g. 20 g per day) of milk fat was consumed.

Preferably the amount of stearic acid (C18:0) is at most 5.5% of the fatty acid composition in the fat blend.

The total amount of *cis*-monounsaturated (*cis*-MUFA) and cis-polyunsaturated (*cis*-PUFA) fatty acids, herein also called cis-unsaturated (*cis*-UFA) fatty acids, is quite high in the fat blend according to the invention. Preferably the total amount of *cis*-monounsaturated (*cis*-MUFA) and *cis*-polyunsaturated (*cis*-PUFA) fatty acids is at least 65% of the fatty acid composition of the fat blend.

Most preferably the nutritionally balanced fatty acid composition (or nutritionally balanced fatty acid profile) means a fatty acid composition where the amount of saturated fatty acids and the total amount of lauric acid and myristic acid, the total amount of lauric acid, myristic acid and palmitic acid, the estimated effect on serum LDL cholesterol, the amount of stearic acid and/or the total amount of cis-monounsaturated (cis-MUFA) and cis-polyunsaturated (cis-PUFA) fatty acids is as described above.

The fat blend of the invention actually lowers serum LDL cholesterol. In addition to the balanced fatty acid composition of the fat blend, which brings the neutral estimated effect on serum LDL cholesterol level, the fat blend of the invention contains also plant sterol ester and/or plant stanol ester that effectively lowers serum LDL cholesterol level.

Surprisingly it was found that by using the fat blend of the invention for making spreads, oiling-out is not a problem in such spreads.

As used here, the term "fat blend" refers to a blend of edible lipids that as such can be used as fat phase of a spread and/or as a shortening. The fat blend of the invention contains plant sterol ester and/or plant stanol ester, milk fat and vegetable oil. The fat blend may also contain vegetable fat, other animal fat than milk fat, free plant sterols and/or free plant stanols, emulsifiers and other fat-soluble ingredients. Obviously the fat blend does not contain non-lipid compounds, such as for example water or minerals.

The amount of plant sterol ester and/or plant stanol ester in the fat blend of the present invention is at least 10 wt-% and at most 50 wt-%. Preferably the amount of plant sterol ester and/or plant stanol ester in the fat blend is at most 45 wt-%, more preferably at most 40 wt-%, still more preferably at most 35 wt-% and most preferably at most 30 wt-%. The amount of plant sterol ester and/or plant stanol ester is preferably at least 12 wt-%, more preferably at least 14 wt-%, still more preferably at least 16 wt-% and most preferably at least 18 wt-%. Typically, the amount of plant sterol ester and/or plant stanol ester is preferably 10-45 wt-%, more preferably 10-40 wt-%, still more preferably 10-35 wt-% and most preferably 10-30 wt-% of the fat blend. Also typically, the amount of plant sterol ester and/or plant stanol ester is preferably 12-45 wt-%, more preferably 14-45 wt-%, still more preferably 16-45 wt-% and most preferably 18-45 wt-% of the fat blend. Further typically, the amount of plant sterol ester and/or plant stanol ester is preferably 12-45 wt-%, more preferably 14-40 wt-%, still more preferably 16-35 wt-% and most preferably 18-30 wt-% of the fat blend.

As used here, the term "plant sterol ester and/or plant stanol ester" refers to plant sterols and/or plant stanols in esterified form. Plant sterols and/or plant stanols are esterified with a fatty acid or with a blend of fatty acids. The term "plant sterol" includes 4-desmethyl sterols and 4-monomethyl sterols and the term "plant stanol" includes 4-desmethyl stanols and 4-monomethyl stanols. Typical 4-desmethyl sterols are sitosterol, campesterol, stigmasterol, brassicasterol, 22-dehydro-brassicasterol and δ5-avenasterol. Typical 4-desmethyl stanols are sitostanol, campestanol and their C24-epimers. The term "plant sterols and/or plant stanols" includes all possible mixtures of named plant sterols and/or plant stanols as well as any individual plant sterol and/or plant stanol.

In this invention plant sterols and/or plant stanols are esterified with a fatty acid or with a blend of fatty acids and are called "plant sterol ester and/or plant stanol ester" or more exactly "plant sterol fatty acid ester and/or plant stanol fatty acid ester". The fatty acids are aliphatic carboxylic acids, have 4-24 carbon atoms, and are saturated, monounsaturated or polyunsaturated. The fatty acids may in addition to major fatty acids also be any minor fatty acids contained in commercially available edible oils and fats. The physical properties of the plant sterol ester and/or plant stanol ester can be modified by changing the fatty acid moiety of the molecule. Preferably the plant sterols and/or plant stanols are esterified with vegetable oil based fatty acids. Preferred are fatty acids of rapeseed oil, soybean oil, sunflower oil and corn oil. However, also fatty acids from other sources, e.g. from vegetable fats such as palm oil and coconut oil, and even from milk fat can be used. Also mixtures of e.g. vegetable oil and vegetable fat based fatty acids can be used. In the case of plant stanol ester, esterification with vegetable oil based fatty acids is preferred. In the case of plant sterol ester, esterification with suitable blends of fatty acids from vegetable oils and vegetable fats is preferred to provide the desired physical properties as e.g. measured by NMR (solid fat content).

Preferably the plant sterol ester and/or plant stanol ester has a solid fat content (SFC) of at least 15%, more preferably at least 20%, still more preferably at least 30%, even more preferably at least 35% and most preferably at least 50% at 20 °C. Preferably the plant sterol ester and/or plant stanol ester may have a solid fat content of at most 45%, more preferably at most 40% and most preferably at most 35% at 40 °C. The solid fat content is measured by conventional pulse NMR technique by using a serial tempering method starting at 10 °C.

Plant sterol ester and/or plant stanol ester contains preferably plant stanol ester in an amount of at least 30%, more preferably at least 50%, still more preferably at least 70% and most preferably at least 90% by weight. Preferably the plant sterol ester and/or plant stanol ester has a solid fat content (SFC) of at least 15%, more preferably at least 20%, still more preferably at least 30%, even more preferably at least 35% and most preferably at least 50% at 20 °C and contains plant stanol ester in an amount of at least 30%, more preferably at least 50%, still more preferably at least 70% and most preferably at least 90% by weight.

Plant stanol ester and the cholesterol lowering effects thereof, as well as a suitable method for its preparation, are disclosed in e.g. US6174560. Obviously plant sterol esters can also efficiently be produced by the production method disclosed in US6174560. Alternatively plant sterol ester and/or plant stanol ester can be produced by any suitable food grade method disclosed in the art. Commercially available plant sterol ester and/or plant stanol ester ingredients e.g. from Raisio Nutrition or BASF can be used. The commercial plant sterol ester and/or plant stanol ester ingredients contain some amounts of free plant sterols and/or free plant stanols (i.e. plant sterols and plant stanols having an unsubstituted hydroxyl group at C3 in the carbon skeleton). The amount of free plant sterol and/or free plant stanol is typically less than 5% of the total amount of plant sterol and/or plant stanol equivalents in the ingredient.

The total content of plant sterols and/or plant stanols (derived both from free and esterified plant sterols and/or plant stanols) can be analyzed by the NMKL Method No. 198 (Nordic Committee on Food Analyses). This method hydrolyzes the plant sterol ester and/or plant stanol ester molecules to free plant sterols and/or free plant stanols, and determines the total content of plant sterols and/or plant stanols as their equivalents, i.e. the sum of plant sterols and/or plant stanols occurring both as free and esterified forms. By "plant sterol and/or plant stanol equivalent" is thus meant the quantitative total amount of plant sterols and/or plant stanols expressed as their free forms. The content of the plant sterol ester and/or plant stanol ester in the fat blend can then be estimated as follows: The possible free plant sterols and/or free plant stanols are separated from the esterified plant sterols and/or plant stanols e.g. by solid phase extraction, followed by derivatisation and quantification e.g. by a gas chromatographic analysis. The content of free plant sterols and/or plant stanols is then subtracted from the content of total plant sterol and/or plant stanol equivalents obtained by the NMKL Method 198, and the result is finally divided by a factor, which represents the weight % of the plant sterol and/or plant stanol moiety in the plant sterol ester and/or plant stanol ester molecule. For example in a case of plant stanol ester consisting mainly of sitostanol and campestanol esterified with rapeseed oil fatty acids, a factor of 0.6 can be used.

The amount of milk fat in the fat blend of the present invention is at least 26%, preferably at least 27%, more preferably at least 28% and most preferably at least 29% by weight of the fat blend. The amount of the milk fat is at most 40% by weight of the fat blend. Preferably the amount of the milk fat is at most 39% by weight, more preferably at most 38% by weight, and still more preferably at most 37% by weight of the fat blend. Most preferably the amount of the milk fat is at most 36% by weight of the fat blend. Typically, the amount of milk fat in the fat blend of the present invention is 26-40%, preferably 26-38%, and more preferably 26-36% by weight. Also typically, the amount of milk fat is 27-40%, preferably 28-40%, and most preferably 29-40% by weight of the fat blend. Further typically, the amount of milk fat in the fat blend of the present invention is 26-39%, more preferably 27-38%, still more preferably 28-37%, and most preferably 29-36% by weight. A still further typical amount of milk fat in the fat blend is 26-37% by weight.

As used here, the term "milk fat" refers to fat obtained from ruminant milk, preferably from bovine milk. Milk fat consists mainly (typically at least 95% by weight) of triacylglycerols. In the fat blend of the current invention, the milk fat can be butter oil, anhydrous milk fat, anhydrous butter oil, fractionated milk fat, otherwise modified milk fat (e.g. interesterified), or mixtures thereof. The milk fat may also be refined, but preferably it is unrefined. Also butter or recombined butter can be used as a source of milk fat. In that case, the amount of water and water-soluble components in the butter or recombined butter is not counted into the milk fat content of the current fat blend. Preferably the milk fat is butter oil, anhydrous milk fat, anhydrous butter oil, fractionated milk fat or a mixture of any thereof. Most preferably the milk fat is butter oil.

The amount of vegetable oil in the fat blend of the present invention is at least 30%, preferably at least 33%, more preferably at least 36%, still more preferably at least 40% and most preferably at least 42% by weight of the fat blend. The amount of the vegetable oil is at most 60% by weight of the fat blend. Preferably the amount of the vegetable oil is at most 57%, more preferably at most 55%, still more preferably at most 53% and most preferably at most 51% by weight of the fat blend. Typically the amount of vegetable oil is preferably 30-57%, more preferably 30-55%, still more preferably 30-53% and most preferably 30-51 % by weight of the fat blend. Also typically, the amount of vegetable oil is preferably 33-60%, more preferably 36-60%, still more preferably 40-60% and most preferably 42-60% by weight of the fat blend. Further typically, the amount of vegetable oil in the fat blend of the present invention is preferably 33-57%, more preferably 36-55%, still more preferably 40-53% and most preferably 42-51% by weight.

The term "vegetable oil" refers to edible oils of plant origin that are liquid at 20 °C, consist mainly (typically at least 95% by weight) of triacylglycerols and are suitable for human consumption. Examples of suitable vegetable oils include rapeseed oil (canola oil), soybean oil, sunflower oil, olive oil and corn oil.

Preferably the fat blend of the present invention contains plant sterol ester and/or plant stanol ester in an amount of at least 10 wt-% and at most 45 wt-%, milk fat in an amount of at least 26 wt-% and at most 40 wt-% and vegetable oil in an amount of at least 30 wt-% and at most 60 wt-% of the fat blend and the amount of saturated fatty acids is at most 35% of the fatty acid composition of the fat blend. More preferably the fat blend of the present invention contains plant sterol ester and/or plant stanol ester in an amount of at least 10 wt-% and at most 40 wt-%, milk fat in an amount of at least 26 wt-% and at most 40 wt-% and vegetable oil in an amount of at least 33 wt-% and at most 60 wt-% of the fat blend and the amount of saturated fatty acids is at most 35% of the fatty acid composition of the fat blend. Still more preferably the fat blend of the present invention contains plant sterol ester and/or plant stanol ester in an amount of at least 10 wt-% and at most 35 wt-%, milk fat in an amount of at least 26 wt-% and at most 40 wt-%, and vegetable oil in an amount of at least 36 wt-% and at most 60 wt-% of the fat blend and the amount of saturated fatty acids is at most 35% of the fatty acid composition of the fat blend. Even more preferably the fat blend of the present invention contains plant sterol ester and/or plant stanol ester in an amount of at least 10 wt-% and at most 30 wt-%, milk fat in an amount of at least 26 wt-% and at most 40 wt-% and vegetable oil in an amount of at least 40 wt-% and at most 60 wt-% of the fat blend and the amount of saturated fatty acids is at most 35% of the fatty acid composition of the fat blend. Further more preferably the fat blend of the present invention contains plant sterol ester and/or plant stanol ester in an amount of at least 10 wt-% and at most 30 wt-%, milk fat in an amount of at least 28 wt-% and at most 40 wt-% and vegetable oil in an amount of at least 40 wt-% and at most 60 wt-% of the fat blend and the amount of saturated fatty acids is at most 35% of the fatty acid composition of the fat blend. Most preferably the fat blend of the present invention contains plant sterol ester and/or plant stanol ester in an amount of at least 10 wt-% and at most 30 wt-%, milk fat in an amount of at least 29 wt-% and at most 40 wt-% and vegetable oil in an amount of at least 42 wt-% and at most 60 wt-% of the fat blend and the amount of saturated fatty acids is at most 35% of the fatty acid composition of the fat blend. In the fat blends described in this paragraph, the amount of saturated fatty acids is more preferably at most 33%, still more preferably at most 32% and most preferably at most 30% of the fatty acid composition.

Preferably the fat blend of the present invention contains plant sterol ester and/or plant stanol ester in an amount of 12-45 wt-%, milk fat in an amount of 26-40 wt-%, and vegetable oil in an amount of 30-60 wt-% the fat blend and the amount of saturated fatty acids is at most 35% of the fatty acid composition of the fat blend. More preferably the fat blend of the present invention contains plant sterol ester and/or plant stanol ester in an amount of 14-40 wt-%, milk fat in an amount of 26-39 wt-% and vegetable oil in an amount of 33-57 wt-% of the fat blend and the amount of saturated fatty acids is at most 35% of the fatty acid composition of the fat blend. Still more preferably the fat blend of the present invention contains plant sterol ester and/or plant stanol ester in an amount of 16-35 wt-%, milk fat in an amount of 26-38 wt-% and vegetable oil in an amount of 36-55 wt-% of the fat blend and the amount of saturated fatty acids is at most 35% of the fatty acid composition of the fat blend. Even more preferably the fat blend of the present invention contains plant sterol ester and/or plant stanol ester in an amount of 18-30 wt-%, milk fat in an amount of 26-37 wt-% and vegetable oil in an amount of 40-53 wt-% of the fat blend and the amount of saturated fatty acids is at most 35% of the fatty acid composition of the fat blend. Further more preferably the fat blend of the present invention contains plant sterol ester and/or plant stanol ester in an amount of 18-30 wt-%, milk fat in an amount of 28-37 wt-% and vegetable oil in an amount of 40-53 wt-% of the fat blend and the amount of saturated fatty acids is at most 35% of the fatty acid composition of the fat blend. Most preferably the fat blend of the present invention contains plant sterol ester and/or plant stanol ester in an amount of 18-30 wt-%, milk fat in an amount of 29-36 wt-% and vegetable oil in an amount of 42-51 wt-% of the fat blend and the amount of saturated fatty acids is at most 35% of the fatty acid composition of the fat blend. In the fat blends described in this paragraph, the amount of saturated fatty acids is more preferably at most 33%, still more preferably at most 32% and most preferably at most 30% of the fatty acid composition.

The fat blend of the present invention preferably has a solid fat content (SFC) of at least 13% at 10 °C. The solid fat content is measured by conventional pulse NMR technique by using a serial tempering method starting at 10 °C. More preferably the fat blend of the invention has a solid fat content of at least 14%, and most preferably at least 15% at 10 °C. Preferably the fat blend of the present invention has a solid fat content (SFC) of at most 35%, more preferably at most 32%, and most preferably at most 30% at 10 °C. Preferably the fat blend has a solid fat content of 13-35%, more preferably 14-32%, and most preferably 15-30% at 10 °C.

Preferably the fat blend of the present invention has a solid fat content (SFC) of at least 3.5%, more preferably at least 4.0% and most preferably at least 4.5% at 20 °C. Preferably the fat blend of the present invention has a solid fat content (SFC) of at most 20%, more preferably at most 18%, and most preferably at most 16% at 20 °C. Preferably the fat blend has a solid fat content of 3.5-20%, more preferably 4.0-18%, and most preferably 4.5-16% at 20 °C.

The fat blend of the present invention can preferably be prepared without using vegetable fats, or alternatively the amount of vegetable fats can be kept low. By "vegetable fat" is meant edible fats of plant origin, which are solid at 20°C, consist mainly of triacylglycerols (typically at least 95% by weight) and are suitable for human consumption. Examples of vegetable fats include palm oil and its hard fractions, coconut oil, palm kernel fat or blends of any of these or interesterified blends of any of these. Vegetable fats can also be prepared from liquid oils e.g. by partial or full hydrogenation and/or fractionation processes. Vegetable fats are often used in the fat blends of conventional margarine type spreads. Such fats contain a quite high amount of LDL cholesterol increasing saturated fatty acids and their consumption should be limited. The content of vegetable fat in the fat blend of the invention is preferably at most 10% and more preferably at most 5.0% by weight. An especially preferred amount of vegetable fat is at most 3.0% and more preferably at most 1.0% by weight. Still more preferably the fat blend of the invention contains essentially no vegetable fat (e.g. the content of vegetable fat is at most 0.5 % by weight of the fat blend) and most preferably there is no vegetable fat.

Despite the optional low content of vegetable fat, the structure and the melting in the mouth of the spread prepared from the fat blend of the invention is good. This could be achieved by using 10-50 wt% plant sterol ester and/or plant stanol ester, at least 26 wt-% and at most 40 wt-% milk fat and at least 30 wt-% and at most 60 wt-% vegetable oil in the fat blend, wherein the amount of saturated fatty acids is at most 35% of the fatty acid composition of the fat blend, and the fat blend preferably having a solid fat content of at least 13% at 10 °C. The spreads have good spreadability at refrigerated temperature (4-6 °C) and retain a reasonably good structure when kept at room temperatures for e.g. the duration of customary meals.

The fat blend of the invention may additionally also contain other animal fat than milk fat, such as lard, tallow and/or their fractions. Preferably the amount of the other animal fat than milk fat is at most 10%, more preferably at most 5.0%, still more preferably at most 3.0% and even more preferably at most 1.0% by weight of the fat blend. Still more preferably the fat blend of the invention contains essentially no (e.g. its content is at most 0.5% by weight of the fat blend) and most preferably there is no other animal fat than the milk fat.

The fat blend of the invention may also contain both vegetable fat and animal fat other than milk fat. If that is the case their total amount is preferably at most 10%, more preferably at most 5.0%, still more preferably at most 3.0% and even more preferably at most 1.0% by weight of the fat blend. Still more preferably the fat blend of the invention contains essentially no (e.g. its content is at most 0.5% by weight of the fat blend) and most preferably there is no vegetable fat and other animal fat than the milk fat.

The fat blend of the invention may additionally contain free plant sterols and/or free plant stanols. The free plant sterols and/or free plant stanols may be included in the fat blend as part of a commercial plant sterol ester and/or plant stanol ester ingredient or in the vegetable oil, or they may be separately added to the fat blend. Preferably the amount of free plant sterols and/or free plant stanols is at most 10%, more preferably at most 5% by weight of the total plant sterol and/or plant stanol equivalents. Preferably the amount of free plant sterols and/or free plant stanols is at most 3.0%, more preferably at most 2.5%, and most preferably at most 1.5% by weight of the fat blend.

Optionally the fat blend of the invention may also contain emulsifiers and other fat-soluble ingredients such as flavouring agents, colours and fat-soluble vitamins. The emulsifier is suitably any emulsifier conventionally used in spreads or shortenings. Preferably the total amount of these ingredients is at most 3.0%, more preferably at most 2.0% and most preferably at most 1.0% by weight of the fat blend.

Thus, the present invention is preferably directed to a fat blend consisting of plant sterol ester and/or plant stanol ester in an amount of 10-50 wt-%, milk fat in an amount of 26-40 wt-%, vegetable oil in an amount of 30-60 wt-%, optionally free plant sterols and/or free plant stanols in an amount of at most 3.0 wt-%, optionally vegetable fat in an amount of at most 10 wt-% and optionally emulsifiers and other optional fat-soluble ingredients, such as flavouring agents, colours and fat-soluble vitamins, in a total amount of at most 3.0 wt-% of the fat blend, and wherein the amount of saturated fatty acids is at most 35% of the fatty acid composition of the fat blend.

Despite the use of milk fat in the fat blend, the fat blend of the present invention has a balanced fatty acid composition. This is surprising because milk fat is included in such an amount that it generates a good buttery taste in the fat blend.

The amount of saturated fatty acids (SAFA) is at most 35%, preferably at most 33%, more preferably at most 32% and most preferably at most 30% of the fatty acid composition of the fat blend. Preferably the amount of *trans* fatty acids is at most 3.0%, more preferably at most 2.0% and most preferably at most 1.0% of the fatty acid composition of the fat blend. In preferred embodiments, the total amount of saturated fatty acids (SAFA) and *trans* fatty acids is at most 35%, more preferably at most 33%, still more preferably at most 32% and most preferably at most 30% of the fatty acid composition of the fat blend. The amount of saturated fatty acids (SAFA) is preferably at least 13% of the fatty acid composition of the fat blend.

Preferably the total amount of cholesterol raising fatty acids, lauric acid (C12:0) and myristic acid (C14:0) is at most 7.5%, more preferably at most 7.0% and most preferably at most 6.5% of the fatty acid composition of the fat blend. Preferably the total amount of cholesterol raising fatty acids, lauric acid (C12:0), myristic acid (C14:0) and palmitic acid (C16:0), is at most 25%, more preferably at most 24% and most preferably at most 23% of the fatty acid composition of the fat blend.

The estimated effect of the fatty acids of the fat blend on serum LDL cholesterol is neutral, i.e. the fatty acids of the fat blend do not notably increase serum LDL cholesterol level. As used herein, the term "estimated effect on serum LDL cholesterol", used in connection with the fatty acid composition, means the estimated net effect of the fatty acid composition on human serum LDL cholesterol level, when the fatty acid composition replaces an equal amount of dietary energy from carbohydrates. The effect of individual fatty acids, as well as the composition, can be estimated by using the regression coefficients published by Mensink et al. (Am. J. Clin. Nutr. 2003;77,1146-55). The estimated effect on serum LDL cholesterol is calculated in this disclosure by assuming that dietary energy from carbohydrates is replaced isoenergetically with 20 g of the fat blend of the invention, if not otherwise specified. Thus, in the case of the fat blend, the effect of the fatty acid composition on serum LDL cholesterol is estimated for 20 g of the fat blend in this disclosure. In the case of spreads, the effect of the fatty acid composition on serum LDL cholesterol is estimated also for the amount of spread that provides the recommended daily dose of plant sterol ester and/or plant stanol ester.

The estimated effect of the fatty acid composition of the fat blend on serum LDL cholesterol is preferably at most +0.03 mmol/l, more preferably at most +0.02 mmol/1, still more preferably at most +0.01 mmol/l and most preferably at most 0.00 mmol/l, when carbohydrates are replaced isoenergetically with 20 g of the fat blend of the invention. The estimated effect of butter, calculated in the same way (20 g milk fat, corresponding to 25 g butter) is +0.15 mmol/l, which can be considered a clinically significant serum LDL cholesterol increase. The estimated effect of the fatty acids of the fat blend of the invention on serum LDL cholesterol is thus preferably at most 20%, and more preferably at most 13% of the corresponding estimated effect of butter.

It is important to notice that in addition to the estimated effect on serum LDL cholesterol, which is obtained by means of the balanced fatty acid composition of the fat blend, the fat blend of the invention contains also plant sterol ester and/or plant stanol ester, which lowers serum LDL cholesterol level. Plant sterol ester and/or plant stanol ester will provide a plant sterol/stanol specific reduction of serum LDL cholesterol that is dose dependent (Musa-Veloso et al., Prostag. Leukotrien. Ess. Fatty Acids 2011; 85: 9-28.). A daily intake of 2 g plant sterol equivalents and/or plant stanol equivalents is expected to reduce serum LDL cholesterol by a mean of about 0.32 mmol/l as part of any diet.

Preferably the amount of stearic acid (C18:0) is at most 5.5% of the fatty acid composition of the fat blend. More preferably the amount of stearic acid is at most 5.0%, and most preferably at most 4.5% of the fatty acid composition of the fat blend.

Preferably the total amount of *cis*-monounsaturated fatty acids (*cis*-MUFA) and *cis*-polyunsaturated fatty acids (*cis*-PUFA) is at least 65%, more preferably at least 67% and most preferably at least 70% of the fatty acid composition of the fat blend.

Because the sterol and/or stanol part of the plant sterol ester and/or plant stanol ester molecule (approximately 60 wt-% of the molecule, if the plant sterols and/or plant stanols are esterified with mainly C18 fatty acids, such as fatty acids from rapeseed oil or sunflower oil) is not absorbed, the amount of absorbable fat is less than the amount of fat blend. By the term "absorbable fat" is meant the weight percentage of the fat blend that is absorbed. Thus the absorbable fat does not include plant sterol and/or plant stanol equivalents which do not contribute to the energy value of the fat blend. The amount of absorbable fat is calculated by subtracting the amount of plant sterol and/or plant stanol equivalents from the amount of fat blend. The amount of absorbable fat in the fat blend is preferably from 70 wt-% to 94 wt-%, more preferably from 73 wt-% to 92 wt-%, still more preferably from 76 wt-% to 91 wt-% and most preferably from 79 wt-% to 89 wt-% of the fat blend.

Of the absorbable fat in the fat blend preferably less than 45 wt-% is derived from milk fat. This means that less than 45 wt-% of the absorbable fat is milk fat or derived from milk fatty acids in cases where the plant sterol ester and/or plant stanol ester that has been esterified with fatty acids of milk fat origin. More preferably at most 44 wt-%, and most preferably at most 43 wt-% of the absorbable fat is derived from milk fat. Preferably less than 45 wt-%, more preferably less than 44 wt-% and most preferably less than 43 wt-% of the absorbable fat is milk fat. Of the absorbable fat in the fat blend preferably at least 50 wt-% is derived from vegetable oil. This means that at least 50 wt-% of the absorbable fat is vegetable oil and/or derived from plant sterol ester and/or plant stanol ester that has been esterified with fatty acids of vegetable oil origin. More preferably at least 55 wt-%, and most preferably at least 57 wt% of the absorbable fat is derived from vegetable oil. Preferably at least 50 wt-%, more preferably at least 55 wt-% and most preferably at least 57 wt-% of the absorbable fat is vegetable oil.

The present invention is also directed to a shortening consisting of the fat blend of the invention. By "shortening" is meant plasticised fat products that are usable for cooking, baking and pan frying. Preferably the shortening of the invention contains 70-94 wt-% absorbable fat.

Another object of the present invention is to provide spreads based on the above disclosed fat blend.

The present invention is thus also directed to a spread, wherein the fat phase of the spread consists of the fat blend of the invention. By "spread" is hereby meant a product that contains an aqueous phase and a fat phase, wherein the aqueous phase is emulsified into the fat phase to produce a spreadable water-in-oil emulsion. The aqueous phase of the spread according to the invention may include any conventionally used components in conventional amounts e.g. buttermilk, skim milk, milk, buttermilk powder, skim milk powder, milk powder, salts, acidulants, yogurt, whey, whey powder, caseinate, milk proteins, water-soluble vitamins, gelling agents, stabilisers and/or preservatives. Preferably at least milk based ingredients should be included in the aqueous phase. Therefore it is preferred to use any of buttermilk, skim milk, milk, buttermilk powder, skim milk powder, milk powder, yogurt, whey, whey powder, caseinate and/or milk proteins. Buttermilk powder or buttermilk is most preferred.

The spread of the invention contains the fat blend of the invention preferably in an amount of 34-90%, more preferably 42-90%, still more preferably 52-90% and most preferably 62-90% by weight of the spread. Preferably the amount of fat blend of the invention is at most 88%, more preferably at most 85% and most preferably at most 80% by weight of the spread. The spread contains no other fat than that included in the fat blend according to the invention. The spread according to the invention has an improved buttery taste.

Preferably the spread of the invention contains 32-75 wt-% absorbable fat. More preferably the content of the absorbable fat is at least 32% more preferably at least 40%, still more preferably at least 50%, and most preferably at least 60% by weight of the spread. Typically, the content of absorbable fat may be at most 70% and most typically at most 60% by weight of the spread. Thus, the spread more preferably contains absorbable fat in an amount of 32-70 wt-%, still more preferably 32-60 wt-%, even more preferably 40-60 wt-% and most preferably 50-60 wt-% of the spread. Typically, the spread preferably may contain 60-75 wt-% and most preferably 60-70 wt-% of absorbable fat. Also typically, the spread preferably may contain 32-50 wt-% of absorbable fat. Customarily the amount of absorbable fat is stated as the "fat content" in the nutritive value labeling on spread packs.

Preferably the present invention is directed to a spread consisting of a fat phase and an aqueous phase, in which spread the fat phase consists of the fat blend according to the invention.

Preferably the spread of the invention fulfils the provisions of the so-called high UFA EU nutrition claim in which at least 70% of the fatty acids present in the product derive from *cis*-unsaturated fat under the condition that *cis*-unsaturated fat provides more than 20% of energy of the product.

The preferred daily dose of plant sterol ester and/or plant stanol ester, calculated as plant sterol and/or plant stanol equivalents is at least 0.8 g, more preferably at least 1.0 g and still more preferably at least 1.5 g plant sterol and/or plant stanol equivalents. The preferred daily dose of plant sterol and/or plant stanol equivalents is at most 5.0 g, more preferably at most 4.0 g and still more preferably at most 3.0 g. Most preferably the daily dose of plant sterol and/or plant stanol equivalents is 2.0 g.

The daily dose of plant sterol ester and/or plant stanol ester is preferably provided by 10-40 g of the spread of the invention. More preferably the daily dose of plant sterol ester and/or plant stanol ester is provided by 15-35 g, still more preferably by 17-32 g and most preferably by 20-30 g of the spread of the invention.

A further object of the present invention is to provide a fat blend, a spread or a shortening for use as a medicament, especially for lowering blood LDL cholesterol. By medicament is here meant a substance that is physiologically active in preventing or alleviating a disease or a risk factor of a disease.

The invention is further directed to a method for lowering blood LDL cholesterol in a subject in need thereof, wherein the fat blend, spread or shortening according to the invention is administered to the subject.

### PREFERRED EMBODIMENTS OF SPREADS OF THE INVENTION

A preferred embodiment of the present invention is a spread having 50-60 wt-% absorbable fat, wherein the fat phase of the spread consists of a fat blend containing plant sterol ester and/or plant stanol ester in an amount of 10-45 wt-%, milk fat in an amount of 26-40 wt-% and vegetable oil in an amount of 30-60 wt-% of the fat blend and wherein the amount of saturated fatty acids is at most 35% of the fatty acid composition of the fat blend. Preferably the fat blend of this embodiment contains plant sterol ester and/or plant stanol ester in an amount of 16-45 wt-%, milk fat in an amount of 26-40 wt-% and vegetable oil in an amount of 33-57 wt-% of the fat blend. More preferably the fat blend of this embodiment contains plant sterol ester and/or plant stanol ester in an amount of 18-45 wt%, milk fat in an amount of 26-37 wt-% and vegetable oil in an amount of 36-55 wt-% of the fat blend. Most preferably the fat blend of this embodiment contains plant sterol ester and/or plant stanol ester in an amount of 18-40 wt%, milk fat in an amount of 28-36 wt-% and vegetable oil in an amount of 42-53 wt-% of the fat blend. Preferably the solid fat content of the fat blend is at least 13% at 10 °C, more preferably the solid fat content of the fat blend is 13-35%, still more preferably 14-32% and most preferably 15-30% at 10 °C. Preferably the solid fat content of the fat blend is 3.5-20%, more preferably 4.0-18% and most preferably 4.5-16% at 20 °C. Preferably plant sterol ester and/or plant stanol ester contains plant stanol ester in an amount of at least 30%, more preferably at least 50%, still more preferably at least 70% and most preferably at least 90% by weight. Preferably the solid fat content (SFC) of the plant sterol ester and/or plant stanol ester is at least 15%, more preferably at least 20%, still more preferably at least 30%, even more preferably at least 35% and most preferably at least 50% at 20 °C. Preferably the fat blend of this embodiment contains at most 10 wt-%, more preferably at most 5.0 wt-%, still more preferably at most 3.0 wt-% and even more preferably at most 1.0 wt-% of vegetable fat. Most preferably the fat blend of this embodiment contains essentially no or no vegetable fat. Preferably the fat blend of this embodiment contains at most 10 wt-%, more preferably at most 5.0 wt-%, still more preferably at most 3.0 wt-% and even more preferably at most 1.0 wt-% of other animal fat than milk fat. Most preferably the fat blend of this embodiment contains essentially no or no other animal fat than milk fat. Preferably the total amount of vegetable fat and the other animal fat than milk fat is at most 10%, more preferably at most 5.0%, still more preferably at most 3.0% and even more preferably at most 1.0% by weight of the fat blend of this embodiment. Most preferably the fat blend of this embodiment contains essentially no or no vegetable fat and other animal fat than the milk fat. Preferably the amount of free plant sterols and/or free plant stanols is at most 3.0 wt-%, more preferably at most 2.5 wt-% and most preferably at most 1.5 wt-% of the fat blend of this embodiment. Preferably the fat blend of this embodiment contains a total amount of emulsifiers and other fat-soluble ingredients, such as flavouring agents, colours and fat-soluble vitamins, at most 3.0 wt-%, more preferably at most 2.0 wt-% and most preferably at most 1.0 wt-% of the fat blend. Thus, the present embodiment is preferably directed to a spread having 50-60 wt-% absorbable fat, wherein the fat phase of the spread consists of a fat blend consisting of plant sterol ester and/or plant stanol ester in an amount of 10-45 wt-%, milk fat in an amount of 26-40 wt-%, vegetable oil in an amount of 30-60 wt-%, optionally free plant sterols and/or free plant stanols in an amount of at most 3.0 wt-%, optionally vegetable fat in an amount of at most 10 wt-% and optionally emulsifiers and other optional fat-soluble ingredients, such as flavouring agents, colours and fat-soluble vitamins, in a total amount of at most 3.0 wt-% of the fat blend, and wherein the amount of saturated fatty acids is at most 35% of the fatty acid composition of the fat blend; or more preferably any of the preferred amounts mentioned in this embodiment. Preferably the amount of milk fat is at most 45 wt-% of the absorbable fat of the fat blend. Preferably the amount of vegetable oil is at least 50 wt-% of the absorbable fat of the fat blend. Preferably at most 45 wt-% of the absorbable fat is derived from milk fat. Preferably at least 55 wt-% of the absorbable fat is derived from vegetable oil. Preferably the amount of saturated fatty acids (SAFA) is at most 33%, more preferably at most 32% and most preferably at most 30% of the fatty acid composition of the fat blend. Preferably the total amount of lauric acid (C12:0) and myristic acid (C14:0) is at most 7.5%, more preferably at most 7.0% and most preferably at most 6.5% of the fatty acid composition of the fat blend. Preferably the total amount of lauric acid (C12:0), myristic acid (C14:0) and palmitic acid (C16:0) is at most 25%, more preferably at most 24% and most preferably at most 23% of the fatty acid composition of the fat blend. Preferably the estimated effect of the fatty acid composition of the fat blend on serum LDL cholesterol is at most +0.03 mmol/1, more preferably at most +0.02 mmol/l, still more preferably at most +0.01 mmol/l and most preferably at most 0.00 mmol/l, when dietary energy from carbohydrates is replaced isoenergetically with 20 g of the fat blend of this embodiment. Preferably the amount of stearic acid (C18:0) is at most 5.5%, more preferably at most 5.0%, and most preferably at most 4.5% of the fatty acid composition of the fat blend. Preferably the total amount of *cis* monounsaturated (*cis*-MUFA) and *cis* polyunsaturated (*cis*-PUFA) fatty acids is at least 65%, more preferably at least 67% and most preferably at least 70% of the fatty acid composition of the fat blend. The total fat content of the spread is preferably from 53% to 86%, more preferably from 55% to 79% and most preferably from 56% to 76% by weight. The spread has a buttery taste. Preferably 1.0-4.0 g, more preferably 1.5-3.0 g and most preferably 2.0 g plant sterol and/or plant stanol equivalents are obtained from 10-40 g, more preferably from 15-35 g, still more preferably from 17-32 g and most preferably from 20-30 g of the spread.

Another preferred embodiment of the present invention is a spread having more than 60 wt-% and at most 70 wt-% absorbable fat, wherein the fat phase of the spread consists of a fat blend containing plant sterol ester and/or plant stanol ester in an amount of 10-40 wt-%, milk fat in an amount of 26-40 wt-% and vegetable oil in an amount of 30-57 wt-% of the fat blend and wherein the amount of saturated fatty acids is at most 35% of the fatty acid composition of the fat blend. Preferably the fat blend of this embodiment contains plant sterol ester and/or plant stanol ester in an amount of 10-35 wt-%, milk fat in an amount of 26-40 wt-% and vegetable oil in an amount of 30-55 wt-% of the fat blend. More preferably the fat blend of this embodiment contains plant sterol ester and/or plant stanol ester in an amount of 18-30 wt-%, milk fat in an amount of 26-37 wt-% and vegetable oil in an amount of 30-53 wt-% of the fat blend. Most preferably the fat blend of this embodiment contains plant sterol ester and/or plant stanol ester in an amount of 18-30 wt%, milk fat in an amount of 28-36 wt-% and vegetable oil in an amount of 30-51 wt-% of the fat blend. Preferably the solid fat content of the fat blend is at least 13% at 10 °C, more preferably the solid fat content of the fat blend is 13-35%, still more preferably 14-32% and most preferably 15-30% at 10 °C. Preferably the solid fat content of the fat blend is 3.5-20%, more preferably 4.0-18% and most preferably 4.5-16% at 20 °C. Preferably plant sterol ester and/or plant stanol ester contains plant stanol ester in an amount of at least 30%, more preferably at least 50%, still more preferably at least 70% and most preferably at least 90% by weight. Preferably the solid fat content (SFC) of the plant sterol ester and/or plant stanol ester is at least 15%, more preferably at least 20%, still more preferably at least 30%, even more preferably at least 35% and most preferably at least 50% at 20 °C. Preferably the fat blend of this embodiment contains at most 10 wt-%, more preferably at most 5.0 wt-%, still more preferably at most 3.0 wt-% and even more preferably at most 1.0 wt-% of vegetable fat. Most preferably the fat blend of this embodiment contains essentially no or no vegetable fat. Preferably the fat blend of this embodiment contains at most 10 wt-%, more preferably at most 5.0 wt-%, still more preferably at most 3.0 wt-% and even more preferably at most 1.0 wt-% of other animal fat than milk fat. Most preferably the fat blend of this embodiment contains essentially no or no other animal fat than milk fat. Preferably the total amount of vegetable fat and the other animal fat than milk fat is at most 10%, more preferably at most 5.0%, still more preferably at most 3.0% and even more preferably at most 1.0% by weight of the fat blend of this embodiment. Most preferably the fat blend of this embodiment contains essentially no or no vegetable fat and other animal fat than the milk fat. Preferably the amount of free plant sterols and/or free plant stanols is at most 3.0 wt-%, more preferably at most 2.5 wt-% and most preferably at most 1.5 wt-% of the fat blend of this embodiment. Preferably the fat blend of this embodiment contains a total amount of emulsifiers and other fat-soluble ingredients, such as flavouring agents, colours and fat-soluble vitamins, at most 3.0%, more preferably at most 2.0% and most preferably at most 1.0% by weight of the fat blend. Thus, the present embodiment is preferably directed to a spread having more than 60 wt-% and at most 70 wt-% absorbable fat, wherein the fat phase of the spread consists of a fat blend consisting of plant sterol ester and/or plant stanol ester in an amount of 10-40 wt-%, milk fat in an amount of 26-40 wt-%, vegetable oil in an amount of 30-57 wt-%, optionally free plant sterols and/or free plant stanols in an amount of at most 3.0 wt-%, optionally vegetable fat in an amount of at most 10 wt-% and optionally emulsifiers and other optional fat-soluble ingredients, such as flavouring agents, colours and fat-soluble vitamins, in a total amount of at most 3.0 wt-% of the fat blend, and wherein the amount of saturated fatty acids is at most 35% of the fatty acid composition of the fat blend; or more preferably any of the preferred amounts mentioned in this embodiment. Preferably the amount of milk fat is at most 45% by weight of the absorbable fat of the fat blend. Preferably the amount of vegetable oil is at least 50% by weight of the absorbable fat of the fat blend. Preferably at most 45 wt-% of the absorbable fat is derived from milk fat. Preferably at least 55 wt-% of the absorbable fat is derived from vegetable oil. Preferably the amount of saturated fatty acids (SAFA) is at 33%, more preferably at most 32% and most preferably at most 30% of the fatty acid composition of the fat blend. Preferably the total amount of lauric acid (C12:0) and myristic acid (C14:0) is at most 7.5%, more preferably at most 7.0% and most preferably at most 6.5% of the fatty acid composition of the fat blend. Preferably the total amount of lauric acid (C12:0), myristic acid (C14:0) and palmitic acid (C16:0) is at most 25%, more preferably at most 24% and most preferably at most 23% of the fatty acid composition of the fat blend. Preferably the estimated effect of the fatty acid composition on serum LDL cholesterol is at most +0.03 mmol/l, more preferably at most +0.02 mmol/l, still more preferably at most +0.01 mmol/l and most preferably at most 0.00 mmol/l, when dietary energy from carbohydrates is replaced isoenergetically with 20 g of the fat blend of this embodiment. Preferably the amount of stearic acid (C18:0) is at most 5.5%, more preferably at most 5.0%, and most preferably at most 4.5% of the fatty acid composition of the fat blend. Preferably the total amount of *cis* monounsaturated (*cis*-MUFA) and *cis* polyunsaturated (*cis*-PUFA) fatty acids is at least 65%, more preferably at least 67% and most preferably at least 70% of the fatty acid composition of the fat blend. The total fat content of the spread is preferably from 64% to 90%, more preferably from 64% to 89% and most preferably from 64% to 85% by weight. The spread has a buttery taste. Preferably 1.0-4.0 g, more preferably 1.5-3.0 g and most preferably 2.0 g plant sterol and/or plant stanol equivalents are obtained from 10-40 g, more preferably from 15-35 g, still more preferably from 17-32 g and most preferably from 20-30 g of the spread.

A still another preferred embodiment of the present invention is a spread having at least 32 wt-% and less than 50 wt-% absorbable fat, wherein the fat phase of the spread consists of a fat blend containing plant sterol ester and/or plant stanol ester in an amount of 10-45 wt-%, milk fat in an amount of 26-40 wt-% and vegetable oil in an amount of 30-57 wt-% of the fat blend and wherein the amount of saturated fatty acids is at most 35% of the fatty acid composition of the fat blend. Preferably the fat blend of this embodiment contains plant sterol ester and/or plant stanol ester in an amount of 14-45 wt-%, milk fat in an amount of 26-40 wt-% and vegetable oil in an amount of 30-55 wt-% of the fat blend. More preferably the fat blend of this embodiment contains plant sterol ester and/or plant stanol ester in an amount of 18-45 wt-%, milk fat in an amount of 26-37 wt-% and vegetable oil in an amount of 36-55 wt-% of the fat blend. Most preferably the fat blend of this embodiment contains plant sterol ester and/or plant stanol ester in an amount of 18-40 wt%, milk fat in an amount of 28-36 wt-% and vegetable oil in an amount of 42-53 wt-% of the fat blend. Preferably the solid fat content of the fat blend is at least 13% at 10 °C, more preferably the solid fat content of the fat blend is 13-35%, still more preferably 14-32% and most preferably 15-30% at 10 °C. Preferably the solid fat content of the fat blend is 3.5-20%, more preferably 4.0-18% and most preferably 4.5-16% at 20 °C. Preferably plant sterol ester and/or plant stanol ester contains plant stanol ester in an amount of at least 30%, more preferably at least 50%, still more preferably at least 70% and most preferably at least 90% by weight. Preferably the solid fat content (SFC) of the plant sterol ester and/or plant stanol ester is at least 15%, more preferably at least 20%, still more preferably at least 30%, even more preferably at least 35% and most preferably at least 50% at 20 °C. Preferably the fat blend of this embodiment contains at most 10 wt-%, more preferably at most 5.0 wt-%, still more preferably at most 3.0 wt-% and even more preferably at most 1.0 wt-% of vegetable fat. Most preferably the fat blend of this embodiment contains essentially no or no vegetable fat. Preferably the fat blend of this embodiment contains at most 10 wt-%, more preferably at most 5.0 wt-%, still more preferably at most 3.0 wt-% and even more preferably at most 1.0 wt-% of other animal fat than milk fat. Most preferably the fat blend of this embodiment contains essentially no or no other animal fat than milk fat. Preferably the total amount of vegetable fat and the other animal fat than milk fat is at most 10%, more preferably at most 5.0%, still more preferably at most 3.0% and even more preferably at most 1.0% by weight of the fat blend of this embodiment. Most preferably the fat blend of this embodiment contains essentially no or no vegetable fat and other animal fat than the milk fat. Preferably the amount of free plant sterols and/or free plant stanols is at most 3.0 wt-%, more preferably at most 2.5 wt-% and most preferably at most 1.5 wt-% of the fat blend of this embodiment. Preferably the fat blend of this embodiment contains a total amount of emulsifiers and other fat-soluble ingredients, such as flavouring agents, colours and fat-soluble vitamins, at most 3.0 wt-%, more preferably at most 2.0 wt-% and most preferably at most 1.0 wt-% of the fat blend. Thus, the present embodiment is preferably directed to a spread having at least 32 wt-% and less than 50 wt-% absorbable fat, wherein the fat phase of the spread consists of a fat blend consisting of plant sterol ester and/or plant stanol ester in an amount of 10-45 wt-%, milk fat in an amount of 26-40 wt-%, vegetable oil in an amount of 30-57 wt-%, optionally free plant sterols and/or free plant stanols in an amount of at most 3.0 wt-%, optionally vegetable fat in an amount of at most 10 wt-% and optionally emulsifiers and other optional fat-soluble ingredients, such as flavouring agents, colours and fat-soluble vitamins, in a total amount of at most 3.0 wt-% of the fat blend, and wherein the amount of saturated fatty acids is at most 35% of the fatty acid composition of the fat blend; or more preferably any of the preferred amounts mentioned in this embodiment. Preferably the amount of milk fat is at most 45 wt-% of the absorbable fat of the fat blend. Preferably the amount of vegetable oil is at least 50 wt-% of the absorbable fat of the fat blend. Preferably at most 45 wt-% of the absorbable fat is derived from milk fat. Preferably at least 55 wt-% of the absorbable fat is derived from vegetable oil. Preferably the amount of saturated fatty acids (SAFA) is at most 33%, more preferably at most 32% and most preferably at most 30% of the fatty acid composition of the fat blend. Preferably the total amount of lauric acid (C12:0) and myristic acid (C14:0) is at most 7.5%, more preferably at most 7.0% and most preferably at most 6.5% of the fatty acid composition of the fat blend. Preferably the total amount of lauric acid (C12:0), myristic acid (C14:0) and palmitic acid (C16:0) is at most 25%, more preferably at most 24% and most preferably at most 23% of the fatty acid composition of the fat blend. Preferably the estimated effect of the fatty acid composition of the fat blend on serum LDL cholesterol is at most +0.03 mmol/l, more preferably at most +0.02 mmol/l, still more preferably at most +0.01 mmol/l and most preferably at most 0.00 mmol/l, when dietary energy from carbohydrates is replaced isoenergetically with 20 g of the fat blend of this embodiment. Preferably the amount of stearic acid (C18:0) is at most 5.5%, more preferably at most 5.0%, and most preferably at most 4.5% of the fatty acid composition of the fat blend. Preferably the total amount of *cis* monounsaturated (*cis*-MUFA) and *cis* polyunsaturated (*cis-*PUFA) fatty acids is at least 65%, more preferably at least 67% and most preferably at least 70% of the fatty acid composition of the fat blend. The total fat content of the spread is preferably from 35% to 69 %, more preferably from 35% to 66% and most preferably from 36% to 63% by weight. The spread has a buttery taste. Preferably 1.0-4.0 g, more preferably 1.5-3.0 g and most preferably 2.0 g plant sterol and/or plant stanol equivalents are obtained from 10-40 g, more preferably from 15-35 g, still more preferably from 17-32 g and most preferably from 20-30 g of the spread.

In this description the amounts given as percentage by weight (wt-%) mean weight/weight percentage. In this description the amounts given as percentage of the fatty acid composition (% of fatty acid composition) mean area-% in a gas chromatographic analysis of the fatty acid composition. The fatty acid composition can be analysed e.g. by the AOCS Ce 1c-89 method.

Both "comprising" and "containing" mean "containing at least" in this context. "Consisting of" is a closed definition and means "is".

The invention will be described in greater detail by means of the following non-limiting examples.

### EXAMPLE 1

Fat blends with different amounts of plant sterol ester and/or plant stanol ester, milk fat and vegetable oil were prepared (Table 1). Butter oil was used as the source of milk fat and rapeseed oil as the vegetable oil. Plant stanol ester in which the plant stanols were esterified with rapeseed oil fatty acids (plant stanol ester 1) or with palm oil fatty acids (plant stanol ester 2) was used. Plant sterol ester was esterified with rapeseed oil, sunflower oil or palm oil fatty acids (plant sterol ester 1, 2 and 3, respectively). A small amount of vegetable fat (palm stearin) was used in two fat blends (fat blend 1 and 2). The fatty acid composition of the starting materials, i.e. plant stanol esters, plant sterol esters, butter oil, palm stearin and rapeseed oil, were analysed by AOCS Ce 1c-89 method.

**Table 1. Compositions of fat blends 1-7**

| Fat blend | Plant stanol ester 1^{∗} | Plant stanol ester 2^{∗} | Plant sterol ester 1^{∗∗} | Plant sterol ester 2^{∗∗} | Plant sterol ester 3^{∗∗} | Butter oil | Rapesee d oil | Vegetabl e fat | Milk fat of the absorbabl e fat (wt%) |
|---|---|---|---|---|---|---|---|---|---|
| | g/100g fat blend | | | | | | | | |
| 1 | 23.8 | | | | | 26 | 45.2 | 5.0 | 30.3 |
| 2 | | | | 20.5 | | 26 | 45.5 | 8.0 | 29.6 |
| 3 | 23.8 | | | | | 32.4 | 43.8 | | 37.8 |
| 4 | 14.4 | | 6.1 | | | 32.5 | 47.0 | | 37.1 |
| 5 | 8.6 | 1.5 | | | | 40 | 49.9 | | 42.6 |
| 6 | | | 16.3 | | 2.9 | 40 | 40.8 | | 45.2 |
| 7 | 20.3 | | | | | 32.4 | 47.3 | | 36.9 |

| | | | | | | | | | |
|---|---|---|---|---|---|---|---|---|---|
| ^{∗}Plant stanol ester 1 was esterified with rapeseed oil fatty acids and plant stanol ester 2 with palm oil fatty acids ^{∗∗}Plant sterol ester 1 was esterified with rapeseed oil fatty acids, plant sterol ester 2 with sunflower oil fatty acids and plant sterol 3 with palm oil fatty acids | | | | | | | | | |

Plant stanol ester, plant sterol ester, butter oil and optionally the vegetable fat were melted until clear according to standard procedures, and blended with rapeseed oil.

Solid fat content (SFC) of the fat blends was measured by pulse NMR technique by using a serial tempering method starting at 10 °C. The fatty acid composition (area-% of the fatty acid composition) was calculated based on the analysed fatty acid compositions of the starting materials. The results are presented in the Table 2.

**Table 2. Results**

| Fat blen d | SFC 10 °C | SFC 20 °C | C12: 0 | C14: 0 | C16: 0 | C12:0 + C14:0 | C12:0+ C14:0+ C16:0 | C18: 0 | SAFA | *Cis* MUF A + *cis* PUFA | Estimated LDL cholestero 1 effect |
|---|---|---|---|---|---|---|---|---|---|---|---|
| | | | % of the fatty acid composition | | | | | | | | mmol/l |
| 1 | 20.4 | 7.7 | 1.1 | 3.5 | 15.5 | 4.6 | 20.1 | 4.1 | 28.8 | 69.2 | 0.00 |
| 2 | 16.4 | 8.4 | 2.6 | 4.0 | 16.8 | 6.6 | 23.5 | 4.3 | 32.4 | 65.8 | 0.01 |
| 3 | 20.2 | 5.8 | 1.4 | 4.3 | 14.3 | 5.7 | 19.9 | 4.5 | 29.9 | 67.9 | 0.00 |
| 4 | 17.4 | 9 | 1.3 | 4.2 | 14.1 | 5.5 | 19.6 | 4.5 | 29.4 | 68.4 | 0.00 |
| 5 | 13.9 | 5.8 | 1.5 | 4.9 | 15.8 | 6.4 | 22.2 | 4.9 | 33.1 | 64.6 | 0.01 |
| 6 | 13.6 | 8.6 | 1.6 | 5.2 | 16.8 | 6.8 | 23.6 | 5.1 | 35.0 | 62.7 | 0.02 |
| 7 | 16.4 | 4.4 | 1.2 | 4.0 | 14.5 | 5.2 | 19.7 | 5.0 | 27.3 | 70.8 | 0.00 |

The estimated effect of the fatty acids of the fat blend on serum LDL cholesterol was calculated by using the method of Mensink et al. (Am. J. Clin. Nutr. 2003;77,1146-55). First, the fatty acid composition (area-% of the fatty acid composition) of the fat blend was converted to "g fatty acid/100 g fat blend" values. To do this, the fatty acids coming from butter oil and rapeseed oil were multiplied by a factor of 0.956 and the fatty acids coming from plant sterol esters and plant stanol ester were multiplied by a factor of 0.4. The dietary energy (kcal) in 20 g of the fat blend was calculated based on the content of absorbable fat in the fat blend. The effects of individual fatty acids on LDL cholesterol were calculated by multiplying the fatty acid content by the coefficient published by Mensink et. al. and by the energy-% provided by 20 g of the fat blend.

For example for the fat blend 3 the estimated effect on serum LDL cholesterol was calculated as follows:
The fat blend 3 contained 32.4 % milk fat, 43.8 % rapeseed oil and 23.8% plant stanol ester. Only 40% of the plant stanol ester is absorbable, so the content of absorbable fat in the fat blend was 85.7% (32.4%+43.8%+0.4^{∗}23.8%). The dietary energy in 20 g of this fat blend is 154 kcal, which is 7.7% of the daily dietary energy in a 2000 kcal diet. The fatty acid contents (g/100 g fat blend) and the estimated effect on LDL cholesterol of each fatty acid as well as the whole fat blend 3 is presented in the Table 3.

**Table 3. Estimated LDL cholesterol**

| Results | C12:0 | C14:0 | C16:0 | C18:0 | *cis* MUFA | *cis* PUFA | *trans* MUFA | Estimated LDL cholesterol effect of the fat blend |
|---|---|---|---|---|---|---|---|---|
| | g/100g fat blend | | | | | | | mmol/l |
| Fat blend 3 | 1.1 | 3.6 | 11.7 | 3.7 | 40.1 | 15.8 | 0.7 | |
| Coefficient | 0.052 | 0.048 | 0.039 | -0.004 | -0.009 | -0.019 | 0.04 | |
| Estimated effect on LDL cholesterol (mmol/1) | 0.00 | 0.01 | 0.04 | -0.00 | -0.03 | -0.02 | 0.00 | 0.00 |

The estimated effect on LDL cholesterol of each fat blend is presented in Table 2. As can be seen of the results (Table 2), all the fat blends had a balanced fatty acid composition (at most 35 % SAFA) and had a neutral estimated effect on LDL cholesterol (at most 0.03 mmol/1). The most preferred fat blends 3, 4 and 7 contained less than 30 % SAFA of the fatty acid composition, and had an estimated LDL cholesterol effect of 0.00 mmol/l.

### EXAMPLE 2

Production of a spread with 60% absorbable fat based on the use of plant stanol ester, butter oil and vegetable oil.

The following fat components were used: rapeseed oil, butter oil and plant stanol ester (with fatty acids derived from rapeseed oil). The plant stanol ester was melted until clear according to standard procedures and the melted butter oil and the rapeseed oil was blended with the molten plant stanol ester in the fat phase mixing tank. The emulsifier, the β-carotene and the fat-soluble flavour blend were then mixed into the fat phase to produce the fat blend according to the present invention. The aqueous phase was produced in a separate mixing tank by mixing the water, salt, the pH-regulating agents, buttermilk powder and water-soluble aroma. An emulsion was formed by mixing the two phases and the emulsion was crystallised on a Gerstenberg & Agger 3 × 57 pilot scale perfector. The obtained product was packed in 400 g tubs and stored < 10 °C to complete the crystallisation process.

| The product was produced according to the following recipe: | | | % by weight |
|---|---|---|---|
| | | % of fat blend | % of spread |
| Fat blend | | | 68.2 |
| | Rapeseed oil | 47 | 31.9 |
| | Butter oil | 32 | 21.8 |
| | Plant stanol ester | 20 | 13.8 |
| | Emulsifiers | 0.9 | 0.6 |
| | β-carotene as colouring agent | 0.003 | 0.002 |
| | Fat-soluble flavours | 0.05 | 0.035 |

| Aqueous phase | | | 31.8 |
|---|---|---|---|
| | Water | | 29.3 |
| | Buttermilk powder | | 1.5 |
| | Salt | | 1.0 |
| | pH-regulating agents | | 0.2 |
| | Water-soluble flavours | | 0.02 |

The product was tasted and found to have a sharp melt down in the mouth and a surprisingly good buttery taste. The product had an excellent spreadability when taken directly from the refrigerator. No oiling-out was seen during storage for 4 months in refrigerator.

The spread contained 13.8 wt-% plant stanol ester corresponding to a plant stanol equivalent content of the product of 8 wt-%. A daily consumption of 25 g spread delivered 2 g plant stanol equivalents and 15 g absorbable fat.

Of the product's fatty acid composition 70.8% were *cis*-unsaturated fatty acids (*cis*-UFA; *cis*-MUFA + *cis*-PUFA) and 27.3% saturated fatty acids. Thus the product fulfills the EU nutrition health claim for unsaturated fatty acids (at least 70% of the fatty acids to be *cis*-UFA and less than 30% SAFA and the *cis*-UFA to provide at least 20 E-% of the calorie content of the product). In addition the product fulfills all major dietary recommendations regarding margarines and spreads. Furthermore the product fulfills the EU Commission approved art. 14 coronary heart disease (CHD) risk reduction health claim based on its fatty acid composition in addition to fulfilling the art. 14. CHD risk reduction health claim for plant stanol ester.

The content of fatty acids needed to estimate the effect on serum LDL cholesterol levels when 25 g (equivalent to 6.75 E-% from the fat in a 2000 kcal diet) of the spread is consumed instead of an isocaloric amount of carbohydrates are as follows (g fatty acids/100 g fat blend): C12:0 1.0; C14:0 3.4; C16:0 12.2; C18:0 4.2; *cis*-MUFA 43.6; *cis*-PUFA 16.1; *trans-MUFA* 0.7.

The sum of LDL increasing saturated fatty acids C12:0 + C14:0 is 5.5% and C12:0 + C14:0 + C16:0 19.7% of the fatty acid composition of the product. The estimated effect from consuming 25 g of the product daily on serum LDL cholesterol based on Mensink et al. is 0.00 mmol/l. The effect of the fatty acid composition on serum LDL cholesterol was also estimated for 20 g of the fat blend, which corresponds to 29 g of the spread. The estimated effect from consuming daily 29 g of the product, i.e. 20 g of the fat blend, on serum LDL cholesterol is 0.00 mmol/1. The amount of C18:0 is 5.0% of the fatty acid composition of the product.

Thus this product is a surprisingly healthy spread alternative that still provides a good buttery taste.

### EXAMPLE 3

Production of a spread with 40% absorbable fat based on the use of plant stanol ester, butter oil and vegetable oil.

The following fat components were used: rapeseed oil, butter oil and plant stanol ester (with fatty acids derived from rapeseed oil). The fat phase was produced as described in Example 2. The aqueous phase was produced according to standard procedures for producing an aqueous phase containing gelatin. The produced emulsion was crystallised on a Gerstenberg & Agger 3 × 57 pilot scale perfector. The obtained product was packed in 400 g tubs and stored at 8 °C to complete the crystallisation process.

The product was produced according to the following recipe: % by weight

| | | % of fat blend | % of spread |
|---|---|---|---|
| Fat blend | | | 48.3 |
| | Rapeseed oil | 40 | 19.4 |
| | Butter oil | 30 | 14.5 |
| | Plant stanol ester | 29 | 13.8 |
| | Emulsifiers | 1 | 0.5 |
| | β-carotene as colouring agent | 0.008 | 0.004 |
| | Fat-soluble flavours | 0.08 | 0.04 |
| | Vitamin A and D3 | 0.02 | 0.009 |

| Aqueous phase | | | 51.7 |
|---|---|---|---|
| | Water | | 47.4 |
| | Gelatin | | 2.5 |
| | Buttermilk powder | | 0.5 |
| | Salt | | 1.2 |
| | pH-regulating agents | | 0.07 |
| | Water-soluble flavours | | 0.06 |

The product was tasted 3 days after storing at 8 °C and found to have a good melt down in the mouth and a good buttery taste. The product had an excellent spreadability when taken directly from the refrigerator. No oiling-out was seen during storage for 3 months in refrigerator.

The spread contained 13.8 wt-% plant stanol ester corresponding to a plant stanol equivalent content of the product of 8 wt-%. A daily consumption of 25 g spread delivered 2 g plant stanol equivalents and 10 g absorbable fat.

Of the product's fatty acid composition 68.5% were *cis*-unsaturated fatty acids (*cis*-UFA) and 29.2% saturated fatty acids. Thus the product fulfills all major dietary recommendations regarding margarines and spreads.

The content of fatty acids needed to estimate the effect on serum LDL cholesterol levels when 25 g (equivalent to 4.5 E-% from the fat in a 2000 kcal diet) of the spread is consumed instead of an isocaloric amount of carbohydrates are as follows (g fatty acids/100g fat blend): C12:0 1.0; C14:0 3.3; C16:0 11.1; C18:0 3.5; *cis*-MUFA 39.0; *cis*-PUFA 15.4; *trans-MUFA* 0.6.

The sum of LDL increasing saturated fatty acids C12:0 + C14:0 is 5.5% and C12:0 + C14:0 + C16:0 19.4% of the fatty acid composition of the product. The estimated effect from consuming 25 g of the product daily on serum LDL cholesterol based on Mensink et al. is 0.00 mmol/1. The effect of the fatty acid composition on serum LDL cholesterol was also estimated for 20 g of the fat blend, which corresponds to 41 g of the spread. The estimated effect from consuming daily 41 g of the product, i.e. 20 g of the fat blend, on serum LDL cholesterol is 0.00 mmol/1. The amount of C18:0 is 4.4% of the fatty acid composition of the product.

### EXAMPLE 4

Production of a spread with 32% absorbable fat based on the use of plant stanol ester, butter oil and vegetable oil.

The following fat components were used: rapeseed oil, butter oil and plant stanol ester (with fatty acids derived from rapeseed oil). The fat phase was produced as described in Example 2. The aqueous phase was produced according to standard procedures for producing an aqueous phase containing gelatin. Due to the increased viscosity of the fat phase, the emulsion was produced with enhanced mixing. The produced emulsion was crystallised on a Gerstenberg & Agger 3 × 57 pilot scale perfector. The obtained product was packed in 400 g tubs and stored at 8 °C to complete the crystallisation process.

The product was produced according to the following recipe: % by weight

| | | % of fat blend | % of spread |
|---|---|---|---|
| Fat blend | | | 40.3 |
| | Rapeseed oil | 39 | 15.8 |
| | Butter oil | 26 | 10.4 |
| | Plant stanol ester | 33 | 13.4 |
| | Emulsifiers | 2 | 0.6 |
| | β-carotene as colouring agent | 0.01 | 0.004 |
| | Fat-soluble flavours | 0.2 | 0.08 |
| | Vitamin A and D3 | 0.04 | 0.017 |

| Aqueous phase | | | 59.7 |
|---|---|---|---|
| | Water | | 55.5 |
| | Gelatin | | 2.5 |
| | Buttermilk powder | | 1.0 |
| | Salt | | 1.0 |
| | pH-regulating agents | | 0.09 |
| | Preservative | | 0.1 |

The product was tasted 3 days after storing at 8 °C and found to have a good melt down in the mouth and a good buttery taste. The product had a good spreadability when taken directly from the refrigerator. No oiling-out was seen even during storage for 4 weeks in refrigerator.

The spread contained 13.4 wt-% plant stanol ester corresponding to a plant stanol equivalent content of the product of 7.8 wt-%. 25 g of the spread daily delivers about 1.9 g plant stanol equivalents and 8 g absorbable fat.

Of the product's fatty acid composition 70.9% were *cis*-unsaturated fatty acids (*cis*-UFA) and 26.9% saturated fatty acids. Thus the product fulfills the provisions for the EU high unsaturation fat nutrition health claim. In addition the product fulfills all major dietary recommendations regarding margarines and spreads. Furthermore the product fulfills the EU Commission approved art. 14 coronary heart disease (CHD) risk reduction health claim based on its fatty acid composition in addition to fulfilling the art. 14. CHD risk reduction health claim for plant stanol ester.

The content of fatty acids needed to estimate the effect on serum LDL cholesterol levels when 25 g (equivalent to 3.6 E-% from the fat in a 2000 kcal diet) of the spread is consumed instead of an isocaloric amount of carbohydrates are as follows (g fatty acids/100 g fat blend): C12:0 0.9; C14:0 2.9; C16:0 9.9; C18:0 3.2; *cis*-MUFA 38.8; *cis*-PUFA 15.7; *trans-MUFA* 0.6.

The sum of LDL increasing saturated fatty acids C12:0 + C14:0 is 4.9% and C12:0 + C14:0 + C16:0 17.9% of the fatty acid composition of the product. The estimated effect from consuming 25 g of the product daily on serum LDL cholesterol based on Mensink et al. is 0.00 mmol/l. The effect of the fatty acid composition on serum LDL cholesterol was also estimated for 20 g of the fat blend, which corresponds to 50 g of the spread. The estimated effect from consuming daily 50 g of the product, i.e. 20 g of the fat blend, on serum LDL cholesterol is 0.00 mmol/l. The amount of C18:0 is 4.1% of the fatty acid composition of the product.

### EXAMPLE 5

Production of a shortening based on plant stanol ester, plant sterol ester, butter oil and vegetable oil.

A shortening product intended for use in cooking was produced by using the following fat components: plant stanol ester, plant sterol ester (both esterified with rapeseed oil fatty acids), butter oil and rapeseed oil, according to the following recipe: % by weight

| | |
|---|---|
| Rapeseed oil | 32.6 |
| Butter oil | 27.0 |
| Plant stanol ester | 24.7 |
| Plant sterol ester | 14.8 |
| Lecithin | 0.8 |
| β-carotene as coloring agent | 0.006 |
| Fat-soluble flavour | 0.08 |
| Vitamin A and D | 0.017 |

The fat blend was produced as described in Example 2. The lecithin, colouring agents and flavour were mixed with the heated plant stanol ester, plant sterol ester, butter oil and rapeseed oil. After that the fat blend was plasticized on a Gerstenberg & Agger 3 × 57 pilot scale perfector. The obtained product was packed in 400 g tubs.

The plant sterol + stanol equivalent content of the product was 23.7 wt-%. The shortening can be used in the cooking so that each food serving contains 5-10 g of the shortening (1.0-3.0 g plant sterol and plant stanol equivalents).

Of the fatty acids in the product 69.2% were *cis*-unsaturated fatty acids (*cis*-UFA) and 28.7% saturated fatty acids.

The content of fatty acids needed to estimate the effect on serum LDL cholesterol levels when 10 g (equivalent to 3.15 E-% from the fat in a 2000 kcal diet) of the shortening is consumed instead of an isocaloric amount of carbohydrates are as follows (g fatty acids/100 g fat blend): C12:0 0.9; C14:0 3.0; C16:0 10.0; C18:0 3.2; *cis*-MUFA 36.0; *cis*-PUFA 14.3; *trans-MUFA* 0.6.

The sum of LDL increasing saturated fatty acids C12:0 + C14:0 is 5.4% and C12:0 + C14:0 + C16:0 19.1% of the fatty acid composition of the product. The estimated effect from consuming 10 g of the shortening on serum LDL cholesterol based on Mensink et al. is 0.00 mmol/l. The effect of the fatty acid composition on serum LDL cholesterol was also estimated for 20 g of the fat blend, which corresponds to 20 g of the shortening. The estimated effect from consuming daily 20 g of the shortening on serum LDL cholesterol is 0.00 mmol/1. The amount of C18:0 is 4.3% of the fatty acid composition of the product.

### EXAMPLE 6

The spread of Example 2 (spread 1) was compared to two commercial spreads in a consumer test. One of the commercial spreads (spread 2) was a conventional butter - vegetable oil spread without plant sterol ester and/or plant stanol ester. This spread is marketed as a buttery tasting alternative to butter and is the market leader in its spread segment in Finland, and is therefore deemed to be a good reference spread. The milk fat content of the spread is 63% of the fat blend. The spread does not contain plant sterol ester and/or plant stanol ester, and does not lower cholesterol. The other reference spread (spread 3) was a cholesterol lowering spread containing plant sterol ester. This spread does not contain milk fat, but buttermilk is added in an attempt to imitate buttery taste. All three spreads had a similar fat content, 60% absorbable fat.

| | Absorbable fat, g/100g | Fat blend, g/100g | Milk fat, % of the fat blend | Vegetabl e oil, % of the fat blend | Plant sterol ester and/or plant stanol ester, % of the fat blend | Vegetable fat, % of the fat blend |
|---|---|---|---|---|---|---|
| Spread 1: Spread of example 2 | 60 | 68.2 | 32.0 | 46.8 | 20.2 | - |
| Spread 2: Conventional butter-vegetable oil spread | 60 | 60 | 63.3 | 36.7 | - | - |
| Spread 3: Plant sterol ester spread with buttermilk | 60 | 68 | - | 81.5^{∗} (includin g vegetable fat) | 18.5 | ^{∗}yes (amount included in the amount of vegetable oil) |

A total of 324 consumers participated in the test. They used the spread at home and filled in a questionnaire. 50% of the consumers were regular users of a conventional butter-vegetable oil spreads, and thus familiar with the buttery taste of these kind of spreads. The consumers evaluated the appearance, spreadability, structure and taste of the spreads by using categories from "really bad" to "excellent".

| | Spread 1 | Spread 2 | Spread 3 |
|---|---|---|---|
| | % subjects rating the spread good or excellent | | |
| Appearance | 79 | 77 | 71 |
| Spreadability | 90 | 90 | 97 |
| Structure | 78 | 78 | 74 |
| Taste | 78 | 78 | 64 |

The spread according to the invention (spread 1) was rated as good as, or even better than the conventional butter-vegetable oil spread (spread 2). Surprisingly the taste of spread 1 was rated as good as the taste of spread 2, even though spread 1 contained only 32.0 % milk fat of the fat blend. In spread 2, the milk fat content was almost twice as high (63.3 % of the fat blend) as in spread 1. Still spread 1 had as good taste, structure and spreadability, and a bit better appearance than spread 2. Compared to spread 3, spread 1 was rated better in appearance, structure and especially in taste. Thus with the fat blend of the invention, a cholesterol lowering spread having surprisingly good character-ristics, especially good taste, can be obtained with lower amount of butter than in conventional butter-vegetable oil spreads. Other benefits of spread 1 include a fatty acid composition fulfilling dietary recommendations, as shown in Example 2.

## Claims

1. A fat blend comprising
- plant sterol ester and/or plant stanol ester in an amount of at least 10% and at most 50% by weight,
- milk fat in an amount of at least 26% and at most 40% by weight,
- vegetable oil in an amount of at least 30% and at most 60% by weight, and
wherein the amount of saturated fatty acids is at most 35% of the fatty acid composition of the fat blend.

2. The fat blend according to claim 1, wherein the amount of milk fat is at least 27%, preferably at least 28% and more preferably at least 29% by weight and/or at most 39%, preferably at most 38%, more preferably at most 37% and most preferably at most 36% by weight.

3. The fat blend according to claim 1 or 2, wherein the amount of vegetable oil is at least 33%, preferably at least 36%, more preferably at least 40% and most preferably at least 42% by weight and/or at most 57%, preferably at most 55%, more preferably at most 53% and most preferably at most 51% by weight.

4. The fat blend according to any one of claims 1 to 3, wherein the amount of plant sterol ester and/or plant stanol ester is at least 12%, preferably at least 14%, more preferably at least 16% and most preferably at least 18% by weight and/or at most 45%, preferably at most 40%, more preferably at most 35% and most preferably at most 30% by weight.

5. The fat blend according to any one of claims 1 to 4, wherein plant sterol ester and/or plant stanol ester has a solid fat content at 20 °C of at least 15%, preferably at least 20%, more preferably at least 30%, still more preferably at least 35% and most preferably at least 50% and/or wherein the plant sterol ester and/or plant stanol ester contains plant stanol ester in an amount of at least 30%, preferably at least 50%, more preferably at least 70% and most preferably at least 90% by weight.

6. The fat blend according to any one of claims 1 to 5, which further contains vegetable fat in an amount of at most 10%, preferably at most 5.0%, more preferably at most 3.0%, still more preferably at most 1.0% and most preferably at most 0.5% by weight.

7. The fat blend according to any one of claims 1 to 5, which contains no vegetable fat.

8. The fat blend according to any one of claims 1 to 7, which further contains emulsifier and optionally other fat-soluble ingredients in a total amount of at most 3.0%, preferably at most 2.0% and most preferably at most 1.0% by weight.

9. The fat blend according to any one of claims 1 to 8, wherein the total amount of lauric acid and myristic acid is at most 7.5%, preferably at most 7.0% and most preferably at most 6.5% of the fatty acid composition of the fat blend and/or the total amount of lauric acid, myristic acid and palmitic acid is at most 25%, preferably at most 24% and most preferably at most 23% of the fatty acid composition of the fat blend and/or the amount of stearic acid is at most 5.5%, preferably at most 5.0% and most preferably at most 4.5% of the fatty acid composition of the fat blend and/or the total amount of cis-mono-unsaturated and cis-polyunsaturated fatty acids is at least 65%, preferably at least 67% and most preferably at least 70% of the fatty acid composition of the fat blend.

10. The fat blend according to any one of claims 1 to 9, wherein it consists of
- plant sterol ester and/or plant stanol ester in an amount of at least 10% and at most 50% by weight,
- milk fat in an amount of at least 26% and at most 40% by weight,
- vegetable oil in an amount of at least 30% and at most 60% by weight,
- free plant sterol and/or free plant stanol in an amount of at most 3.0% by weight,
- emulsifier and other fat-soluble ingredients in a total amount of at most 3.0% by weight,
- optionally vegetable fat in an amount of at most 10%, preferably at most 5.0%, more preferably at most 3.0% and most preferably at most 1.0% by weight, and
wherein the amount of saturated fatty acids is at most 35% of the fatty acid composition of the fat blend.

11. The fat blend according to any one of claims 1 to 10, wherein the amount of milk fat is at most 45%, preferably at most 44 % and most preferably at most 43 % by weight of the absorbable fat in the fat blend.

12. The fat blend according to any one of claims 1 to 11, wherein it is a shortening.

13. Spread comprising an aqueous phase and a fat phase, wherein the fat phase consists of the fat blend according to any one of claims 1 to 11.

14. The spread according to claim 13, wherein the amount of fat phase is 34-90% and preferably at most 88%, more preferably at most 85% and most preferably at most 80% by weight of the spread and/or preferably at least 42%, more preferably at least 52% and most preferably at least 62% by weight of the spread and/or wherein the amount of absorbable fat is 32-75%, preferably 32-70%, more preferably 32-60%, still more preferably 40-60% and most preferably 50-60% by weight.

15. Use of the fat blend according to any one of claims 1 and 5 to 11 for preparing a spread containing absorbable fat in an amount of at least 32% and less than 50% by weight, which spread comprises by weight of the fat blend
- plant sterol ester and/or plant stanol ester in an amount of 10-45%, preferably 18-45% and most preferably 18-40%,
- milk fat in an amount of 26-40%, preferably 26-37% and most preferably 28-36%, and
- vegetable oil in an amount of 30-57%, preferably 36-55% and most preferably 42-53%;
or for preparing a spread containing absorbable fat in an amount of 50-60% by weight, which spread comprises by weight of the fat blend
- plant sterol ester and/or plant stanol ester in an amount of 10-45%, preferably 18-45% and most preferably 18-40%,
- milk fat in an amount of 26-40%, preferably 26-37% and most preferably 28-36%, and
- vegetable oil in an amount of 30-60%, preferably 36-55% and most preferably 42-53%;
or for preparing a spread containing absorbable fat in an amount of more than 60% and at most 70% by weight, which spread comprises by weight of the fat blend
- plant sterol ester and/or plant stanol ester in an amount of 10-40%, preferably 18-30%,
- milk fat in an amount of 26-40%, preferably 26-37% and most preferably 28-36%, and
- vegetable oil in an amount of 30-57%, preferably 30-53% and most preferably 30-51%.

## Patentansprüche

1. Fettmischung, umfassend
- Pflanzensterolester und/oder Pflanzenstanolester in einer Menge von wenigstens 10 Gew.-% und höchstens 50 Gew.-%,
- Milchfett in einer Menge von wenigstens 26 Gew.-% und höchstens 40 Gew.-%,
- Pflanzenöl in einer Menge von wenigstens 30 Gew.-% und höchstens 60 Gew.-% und
wobei die Menge an gesättigten Fettsäuren höchstens 35 % der Fettsäurezusammensetzung der Fettmischung beträgt.

2. Fettmischung gemäß Anspruch 1, wobei die Menge an Milchfett wenigstens 27 Gew.-%, vorzugsweise wenigstens 28 Gew.-% und bevorzugter wenigstens 29 Gew.-% und/oder höchstens 39 Gew.-%, vorzugsweise höchstens 38 Gew.-%, bevorzugter höchstens 37 Gew.-% und höchst bevorzugt höchstens 36 Gew.-% beträgt.

3. Fettmischung gemäß Anspruch 1 oder 2, wobei die Menge an Pflanzenöl wenigstens 33 Gew.-%, vorzugsweise wenigstens 36 Gew.-%, bevorzugter wenigstens 40 Gew.-% und höchst bevorzugt wenigstens 42 Gew.-% und/oder höchstens 57 Gew.-%, vorzugsweise höchstens 55 Gew.-%, bevorzugter höchstens 53 Gew.-% und höchst bevorzugt höchstens 51 Gew.-% beträgt.

4. Fettmischung gemäß einem der Ansprüche 1 bis 3, wobei die Menge an Pflanzensterolester und/oder Pflanzenstanolester wenigstens 12 Gew.-%, vorzugsweise wenigstens 14 Gew.-%, bevorzugter wenigstens 16 Gew.-% und höchst bevorzugt wenigstens 18 Gew.-% und/oder höchstens 45 Gew.-%, vorzugsweise höchstens 40 Gew.-%, bevorzugter höchstens 35 Gew.-% und höchst bevorzugt höchstens 30 Gew.-% beträgt.

5. Fettmischung gemäß einem der Ansprüche 1 bis 4, wobei der Pflanzensterolester und/oder Pflanzenstanolester einen Festfettgehalt bei 20 °C von wenigstens 15 %, vorzugsweise wenigstens 20 %, bevorzugter wenigstens 30 %, noch bevorzugter wenigstens 35 % und höchst bevorzugt wenigstens 50 % aufweist und/oder wobei der Pflanzensterolester und/oder Pflanzenstanolester Pflanzenstanolester in einer Menge von wenigstens 30 Gew.-%, vorzugsweise wenigstens 50 Gew.-%, bevorzugter wenigstens 70 Gew.-% und höchst bevorzugt wenigstens 90 Gew.-% enthält.

6. Fettmischung gemäß einem der Ansprüche 1 bis 5, die ferner Pflanzenfett in einer Menge von höchstens 10 Gew.-%, vorzugsweise höchstens 5,0 Gew.-%, bevorzugter höchstens 3,0 Gew.-%, noch bevorzugter höchstens 1,0 Gew.-% und höchst bevorzugt höchstens 0,5 Gew.-% enthält.

7. Fettmischung gemäß einem der Ansprüche 1 bis 5, die kein Pflanzenfett enthält.

8. Fettmischung gemäß einem der Ansprüche 1 bis 7, die ferner Emulgator und gegebenenfalls weitere fettlösliche Inhaltsstoffe in einer Gesamtmenge von höchstens 3,0 Gew.-%, vorzugsweise höchstens 2,0 % und höchst bevorzugt höchstens 1,0 Gew.-% enthält.

9. Fettmischung gemäß einem der Ansprüche 1 bis 8, wobei die Gesamtmenge von Laurinsäure und Myristinsäure höchstens 7,5 %, vorzugsweise höchstens 7,0 % und höchst bevorzugt höchstens 6,5 % der Fettsäurezusammensetzung der Fettmischung beträgt und/oder die Gesamtmenge von Laurinsäure, Myristinsäure und Palmitinsäure höchstens 25 %, vorzugsweise höchstens 24 % und höchst bevorzugt höchstens 23 % der Fettsäurezusammensetzung der Fettmischung beträgt und/oder die Menge von Stearinsäure höchstens 5,5 %, vorzugsweise höchstens 5,0 % und höchst bevorzugt höchstens 4,5 % der Fettsäurezusammensetzung der Fettmischung beträgt und/oder die Gesamtmenge von cis-einfach-ungesättigten und cis-mehrfach-ungesättigten Fettsäuren wenigstens 65 %, vorzugsweise wenigstens 67 % und höchst bevorzugt wenigstens 70 % der Fettsäurezusammensetzung der Fettmischung beträgt.

10. Fettmischung gemäß einem der Ansprüche 1 bis 9, bestehend aus
- Pflanzensterolester und/oder Pflanzenstanolester in einer Menge von wenigstens 10 Gew.-% und höchstens 50 Gew.-%,
- Milchfett in einer Menge von wenigstens 26 Gew.-% und höchstens 40 Gew.-%,
- Pflanzenöl in einer Menge von wenigstens 30 Gew.-% und höchstens 60 Gew.-%,
- freiem Pflanzensterol und/oder freiem Pflanzenstanol in einer Menge von höchstens 3,0 Gew.-%,
- Emulgator und anderen fettlöslichen Inhaltsstoffen in einer Gesamtmenge von höchstens 3,0 Gew.-%,
- gegebenenfalls Pflanzenfett in einer Menge von höchstens 10 Gew.-%, vorzugsweise höchstens 5,0 Gew.-%, bevorzugter höchstens 3,0 Gew.-% und höchst bevorzugt höchstens 1,0 Gew.-%, und
wobei die Menge an gesättigten Fettsäuren höchstens 35 % der Fettsäurezusammensetzung der Fettmischung beträgt.

11. Fettmischung gemäß einem der Ansprüche 1 bis 10, wobei die Menge an Milchfett höchstens 45 Gew.-%, vorzugsweise höchstens 44 Gew.-% und höchst bevorzugt höchstens 43 Gew.-% des absorbierbaren Fetts in der Fettmischung beträgt.

12. Fettmischung gemäß einem der Ansprüche 1 bis 11, die ein Backfett ist.

13. Aufstrich, umfassend eine wässrige Phase und eine Fettphase, wobei die Fettphase aus der Fettmischung gemäß einem der Ansprüche 1 bis 11 besteht.

14. Aufstrich gemäß Anspruch 13, wobei die Menge an Fettphase 34-90 Gew.-% und vorzugsweise höchstens 88 Gew.-%, bevorzugter höchstens 85 Gew.-% und höchst bevorzugt höchstens 80 Gew.-% des Aufstrichs und/oder vorzugsweise wenigstens 42 Gew.-%, bevorzugter wenigstens 52 Gew.-% und höchst bevorzugt wenigstens 62 Gew.-% des Aufstrichs beträgt und/oder wobei die Menge an absorbierbarem Fett 32-75 Gew.-%,vorzugsweise 32-70 Gew.-%, bevorzugter 32-60 Gew.-%, noch bevorzugter 40-60 Gew.-% und höchst bevorzugt 50-60 Gew.-% beträgt.

15. Verwendung der Fettmischung gemäß einem der Ansprüche 1 und 5 bis 11 zur Herstellung eines Aufstrichs, der absorbierbares Fett in einer Menge von wenigstens 32 Gew.-% und weniger als 50 Gew.-% enthält, welcher Aufstrich nach Gewicht der Fettmischung umfasst:
- Pflanzensterolester und/oder Pflanzenstanolester in einer Menge von 10-45 %, vorzugsweise 18-45 % und höchst bevorzugt 18-40 %,
- Milchfett in einer Menge von 26-40 %, vorzugsweise 26-37 % und höchst bevorzugt 28-36 % und
- Pflanzenöl in einer Menge von 30-57 %, vorzugsweise 36-55 % und höchst bevorzugt 42-53 %;
oder zur Herstellung eines Aufstrichs, der absorbierbares Fett in einer Menge von 50-60 Gew.-% enthält, welcher Aufstrich nach Gewicht der Fettmischung umfasst:
- Pflanzensterolester und/oder Pflanzenstanolester in einer Menge von 10-45 %, vorzugsweise 18-45 % und höchst bevorzugt 18-40 %,
- Milchfett in einer Menge von 26-40 %, vorzugsweise 26-37 % und höchst bevorzugt 28-36 % und
- Pflanzenöl in einer Menge von 30-60 %, vorzugsweise 36-55 % und höchst bevorzugt 42-53 %;
oder zur Herstellung eines Aufstrichs, der absorbierbares Fett in einer Menge von mehr als 60 Gew.-% und höchstens 70 Gew.-% enthält, welcher Aufstrich nach Gewicht der Fettmischung umfasst:
- Pflanzensterolester und/oder Pflanzenstanolester in einer Menge von 10-40 %, vorzugsweise 18-30 %,
- Milchfett in einer Menge von 26-40 %, vorzugsweise 26-37 % und höchst bevorzugt 28-36 % und
- Pflanzenöl in einer Menge von 30-57 %, vorzugsweise 30-53 % und höchst bevorzugt 30-51 %.

## Revendications

1. Mélange de graisses comprenant
- un ester de stérol végétal et/ou un ester de stanol végétal en une quantité d'au moins 10 % et d'au plus 50 % en poids,
- une graisse de lait en une quantité d'au moins 26 % et d'au plus 40 % en poids,
- une huile végétale en une quantité d'au moins 30 % et d'au plus 60 % en poids, et
la quantité d'acides gras saturés étant d'au plus 35 % de la composition d'acides gras du mélange de graisses.

2. Mélange de graisses selon la revendication 1, la quantité de graisse de lait étant d'au moins 27 %, préférablement d'au moins 28 % et plus préférablement d'au moins 29 % en poids et/ou d'au plus 39 %, préférablement d'au plus 38 %, plus préférablement d'au plus 37 % et le plus préférablement d'au plus 36 % en poids.

3. Mélange de graisses selon la revendication 1 ou 2, la quantité d'huile végétale étant d'au moins 33 %, préférablement d'au moins 36 %, plus préférablement d'au moins 40 % et le plus préférablement d'au moins 42 % en poids et/ou d'au plus 57 %, préférablement d'au plus 55 %, plus préférablement d'au plus 53 % et le plus préférablement d'au plus 51 % en poids.

4. Mélange de graisses selon l'une quelconque des revendication 1 à 3, la quantité d'ester de stérol végétal et/ou d'ester de stanol végétal étant d'au moins 12 %, préférablement d'au moins 14 %, plus préférablement d'au moins 16 % et le plus préférablement d'au moins 18 % en poids et/ou d'au plus 45 %, préférablement d'au plus 40 %, plus préférablement d'au plus 35 % et le plus préférablement d'au plus 30 % en poids.

5. Mélange de graisses selon l'une quelconque des revendications 1 à 4, l'ester de stérol végétal et/ou l'ester de stanol végétal possédant une teneur en graisse solide à 20 °C d'au moins 15 %, préférablement d'au moins 20 %, plus préférablement d'au moins 30 %, encore plus préférablement d'au moins 35 % et le plus préférablement d'au moins 50 % et/ou l'ester de stérol végétal et/ou l'ester de stanol végétal contenant un ester de stanol végétal en une quantité d'au moins 30 %, préférablement d'au moins 50 %, plus préférablement d'au moins 70 % et le plus préférablement d'au moins 90 % en poids.

6. Mélange de graisses selon l'une quelconque des revendications 1 à 5, lequel contient en outre une graisse végétale en une quantité d'au plus 10 %, préférablement d'au plus 5,0 %, plus préférablement d'au plus 3,0 %, encore plus préférablement d'au plus 1,0 % et le plus préférablement d'au plus 0,5 % en poids.

7. Mélange de graisses selon l'une quelconque des revendications 1 à 5, lequel ne contient pas de graisse végétale.

8. Mélange de graisses selon l'une quelconque des revendications 1 à 7, lequel contient en outre un émulsifiant et éventuellement d'autres ingrédients solubles dans une graisse en une quantité totale d'au plus 3,0 %, préférablement d'au plus 2,0 % et le plus préférablement d'au plus 1,0 % en poids.

9. Mélange de graisses selon l'une quelconque des revendication 1 à 8, la quantité totale d'acide laurique et d'acide myristique étant d'au plus 7,5 %, préférablement d'au plus 7,0 % et le plus préférablement d'au plus 6,5 % de la composition d'acides gras du mélange de graisses et/ou la quantité totale d'acide laurique, d'acide myristique et d'acide palmitique étant d'au plus 25 %, préférablement d'au plus 24 % et le plus préférablement d'au plus 23 % de la composition d'acides gras du mélange de graisses et/ou la quantité d'acide stéarique étant d'au plus 5,5 %, préférablement d'au plus 5,0 % et le plus préférablement d'au plus 4,5 % de la composition d'acides gras du mélange graisse et/ou la quantité totale d'acides gras cis-mono-insaturés et cis-polyinsaturés étant d'au moins 65 %, préférablement d'au moins 67 % et le plus préférablement d'au moins 70 % de la composition d'acides gras du mélange de graisses.

10. Mélange de graisses selon l'une quelconque des revendications 1 à 9, qui est constitué de
- un ester de stérol végétal et/ou un ester de stanol végétal en une quantité d'au moins 10 % et d'au plus 50 % en poids,
- une graisse de lait en une quantité d'au moins 26 % et d'au plus 40 % en poids,
- une huile végétale en une quantité d'au moins 30 % et d'au plus 60 % en poids,
- un stérol végétal libre et/ou un stanol végétal libre en une quantité d'au plus 3,0 % en poids,
- un émulsifiant et d'autres ingrédients solubles dans une graisse en une quantité totale d'au plus 3,0 % en poids,
- éventuellement une graisse végétale en une quantité d'au plus 10 %, préférablement d'au plus 5,0 %, plus préférablement d'au plus 3,0 % et le plus préférablement d'au plus 1,0 % en poids, et
la quantité d'acides gras saturés étant d'au plus 35 % de la composition d'acides gras du mélange de graisses.

11. Mélange de graisses selon l'une quelconque des revendications 1 à 10, la quantité de graisse de lait étant d'au plus 45 %, préférablement d'au plus 44 % et le plus préférablement d'au plus 43 % en poids de la graisse absorbable dans le mélange de graisses.

12. Mélange de graisses selon l'une quelconque des revendications 1 à 11, qui est une matière grasse.

13. Pâte à tartiner comprenant une phase aqueuse et une phase graisseuse, la phase graisseuse étant constituée du mélange de graisses selon l'une quelconque des revendication 1 à 11.

14. Pâte à tartiner selon la revendication 13, la quantité de phase graisseuse étant de 34 à 90 % et préférablement d'au plus 88 %, plus préférablement d'au plus 85 % et le plus préférablement d'au plus et 80 % en poids de la pâte à tartiner et/ou préférablement d'au moins 42 %, plus préférablement d'au moins 52 % et le plus préférablement d'au moins 62 % en poids de la pâte à tartiner et/ou la quantité de graisse absorbable étant de 32 à 75 %, préférablement de 32 à 70 %, plus préférablement de 32 à 60 %, encore plus préférablement de 40 à 60 % et le plus préférablement de 50 à 60 % en poids.

15. Utilisation du mélange de graisses selon l'une quelconque des revendication 1 et 5 à 11 pour la préparation d'une pâte à tartiner contenant une graisse absorbable en une quantité d'au moins 32 % et de moins de 50 % en poids, laquelle pâte à tartiner comprenant par poids du mélange de graisses
- un ester de stérol végétal et/ou un ester de stanol végétal en une quantité de 10 à 45 %, préférablement de 18 à 45 % et le plus préférablement de 18 à 40 %,
- une graisse de lait en une quantité de 26 à 40 %, préférablement de 26 à 37 % et le plus préférablement de 28 à 36 %, et
- une huile végétale en une quantité de 30 à 57 %, préférablement de 36 à 55 % et le plus préférablement de 42 à 53 % ;
ou pour la préparation d'une pâte à tartiner contenant une graisse absorbable en une quantité de 50 à 60 % en poids, laquelle pâte à tartiner comprenant par poids du mélange de graisses
- un ester de stérol végétal et/ou un ester de stanol végétal en une quantité de 10 à 45 %, préférablement de 18 à 45 % et le plus préférablement de 18 à 40 %,
- une graisse de lait en une quantité de 26 à 40 %, préférablement de 26 à 37 % et le plus préférablement de 28 à 36 %, et
- une huile végétale en une quantité de 30 à 60 %, préférablement de 36 à 55 % et le plus préférablement de 42 à 53 % ;
ou pour la préparation d'une pâte à tartiner contenant une graisse absorbable en une quantité supérieure à 60 % et d'au plus 70 % en poids, laquelle pâte à tartiner comprenant par poids du mélange de graisses
- un ester de stérol végétal et/ou un ester de stanol végétal en une quantité de 10 à 40 %, préférablement de 18 à 30 %,
- une graisse de lait en une quantité de 26 à 40 %, préférablement de 26 à 37 % et le plus préférablement de 28 à 36 %, et
une huile végétale en une quantité de 30 à 57 %, préférablement de 30 à 53 % et le plus préférablement de 30 à 51 %.
